# EUROPÄISCHE PATENTSCHRIFT

(11) **EP 1 137 716 B1**
(45) Veröffentlichungstag und Bekanntmachung des Hinweises auf die Patenterteilung: **20.08.2003**
(21) Anmeldenummer: 99932887.5
(22) Anmeldetag: 15.07.1999
(51) Int. Cl.: C09B 62/475

(54) **REAKTIVFARBSTOFFE, MISCHUNGEN VON REAKTIVFARBSTOFFEN, DEREN HERSTELLUNG UND DEREN VERWENDUNG**
REACTIVE COLORANTS, MIXTURES OF REACTIVE COLORANTS AND PRODUCTION AND USE THEREOF
COLORANTS REACTIFS, MELANGES DE COLORANTS REACTIFS, LEUR PREPARATION ET LEUR UTILISATION

(30) Priorität: 27.07.1998 EP 98810722
(43) Veröffentlichungstag der Anmeldung: 04.10.2001
(73) Patentinhaber: Ciba Specialty Chemicals Holding Inc., 4057 Basel (CH)
(72) Erfinder: TZIKAS, Athanassios, CH-4133 Pratteln (CH); KLIER, Herbert, D-79588 Efringen-Kirchen (DE)
(86) Internationale Anmeldenummer: EP9905020
(87) Internationale Veröffentlichungsnummer: WO00006652

(56) Entgegenhaltungen:
- DE-A- 19 600 765
- DE-A- 19 640 189
- DATABASE WPI Week 9015 Derwent Publications Ltd., London, GB; AN 90-005299 XP002087311 "Bisazo dye and black reactive dye mixture" & JP 01 289868 A (KIWA KAGAKU KOGYO KK), 21. November 1989 (1989-11-21) & CHEMICAL ABSTRACTS, vol. 112, no. 20, 14. Mai 1990 (1990-05-14) Columbus, Ohio, US; abstract no. 181385d, S. MAEKAWA ET. AL.: "Disazo dyes, their manufacture, and black reactive dyes." Seite 111; XP000065003
- DATABASE WPI Week 9630 Derwent Publications Ltd., London, GB; AN 96-295660 XP002087312 "Full black inks for ink jet printing" & JP 08 127730 A (SUMITOMO CHEM. CO. LTD.) , 21. Mai 1996 (1996-05-21) & JP 08 127730 A
- DATABASE WPI Week 9116 Derwent Publications Ltd., London, GB; AN 91-114501 XP002087313 "New watersoluble trisazo naphthalene derivated dye" & JP 03 056569 A (MITSUBISHI KASEI CORP.), 12. März 1991 (1991-03-12) & JP 03 056569 A
- DATABASE WPI Week 9507 Derwent Publications Ltd., London, GB; AN 95-371529 XP002087314 "Dyeing cellulose fibre - bye using reactive dye contg. copper ligand" & JP 07 252786 A (NIPPON KAYAKU KK), 3. Oktober 1995 (1995-10-03) & JP 07 252786 A
- DATABASE WPI Week 9549 Derwent Publications Ltd., London, GB; AN 95-380595 XP002087315 "Dyeing of cellulose fibre" & JP 07 258983 A (NIPPON KAYAKU KK), 9. Oktober 1995 (1995-10-09) & JP 07 258983 A
- DATABASE WPI Week 8811 Derwent Publications Ltd., London, GB; AN 88-274016 XP002087316 "New dark blue trisazo reactive dye" & JP 63 199269 A (NIPPON KAYAKU KK), 17. August 1988 (1988-08-17) & JP 63 199269 A

## Beschreibung

Die vorliegende Erfindung betrifft neue Reaktivfarbstoffe und Mischungen von Reaktivfarbstoffen, Verfahren zu ihrer Herstellung und ihre Verwendung.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen femer eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe und Mischungen von Reaktivfarbstoffen für das Färben und Bedrucken von Fasermaterialien zu finden, welche die oben charakterisierten Qualitäten in hohem Masse besitzen. Die neuen Farbstoffe und Farbstoffmischungen sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen und Farbstoffmischungen die gestellte Aufgabe weitgehend gelöst wird.

Gegenstand der vorliegenden Erfindung sind somit Farbstoffmischungen enthaltend mindestens eine Verbindung der Formeln (1a) und (1b) 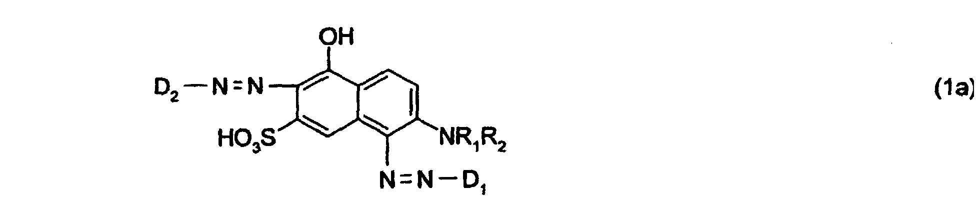 und 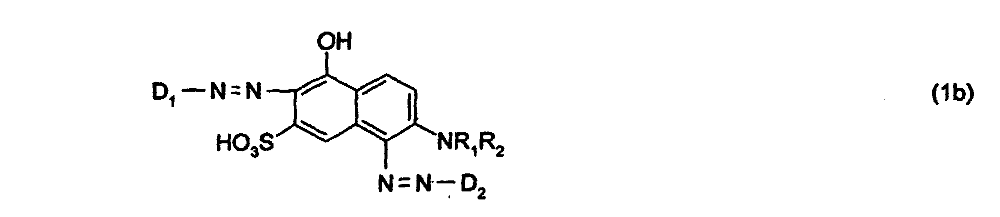 zusammen mit mindestens einer Verbindung der Formeln (1c) und (1d) 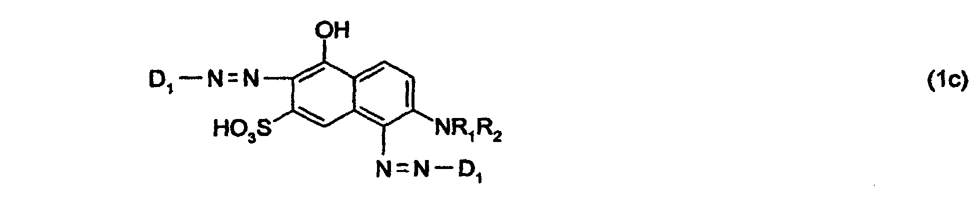 und 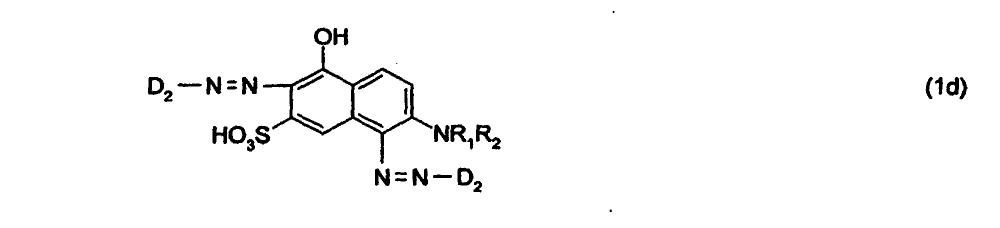 worin
R₁ und R₂ Wasserstoff bedeuten, und
D₁ und D₂ nicht identisch sind und unabhängig voneinander je für einen Rest der Formel (2) 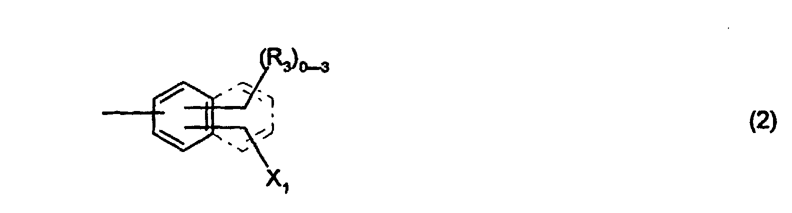 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3a), (3b), (3c), (3d), (3e) oder (3f)

-SO₂-Z (3a),

-NH-CO-(CH₂)ₘ-SO₂-Z (3b),

-CONH-(CH₂)ₙ-SO₂-Z (3c),

-NH-CO-CH(Hal)-CH₂-Hal (3d),

-NH-CO-C(Hal)=CH₂ (3e)

oder 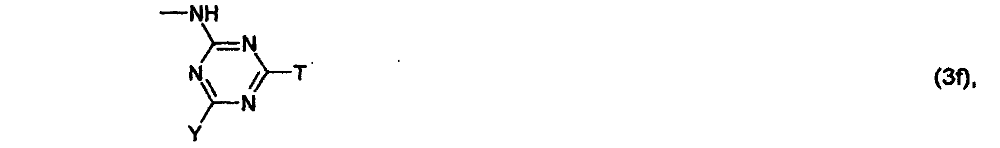 bedeutet, worin
Y Halogen; T unabhängig die Bedeutung von Y hat; für Hydroxy; C₁-C₄-Alkoxy; gegebenenfalls durch Hydroxy, Carboxy oder Sulfo substituiertes C₁-C₄-Alkylthio; Amino; einoder zweifach durch C₁-C₈-Alkyl substituiertes Amino, wobei das Alkyl gegebenenfalls durch Sulfo, Sulfato, Hydroxy, Carboxy oder Phenyl weitersubstituiert ist und gegebenenfalls durch einen Rest -O- unterbrochen ist; Cydohexylamino; Morpholino; N-C₁-C₄-Alkyl-N-phenylamino, Phenylamino oder Naphthylamino, wobei das Phenyl oder Naphthyl gegebenenfalls durch C₁-C₄-Alkyl, C₁-C₄-Alkoxy, Carboxy, Sulfo oder Halogen substituiert ist; oder für einen faserreaktiven Rest der Formel (4a), (4b), (4c), (4d) oder (4e)

-NH-(CH₂)₂₋₃-SO₂-Z (4a),

-NH-(CH₂)₂₋₃-O-(CH₂)₂₋₃-SO₂-Z (4b),

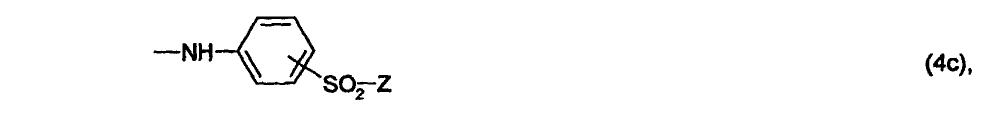

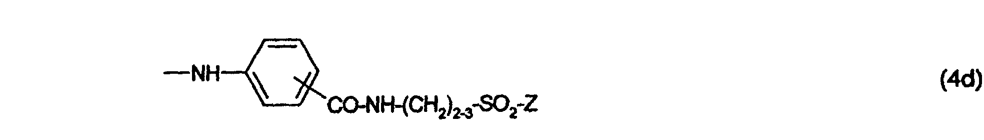

oder 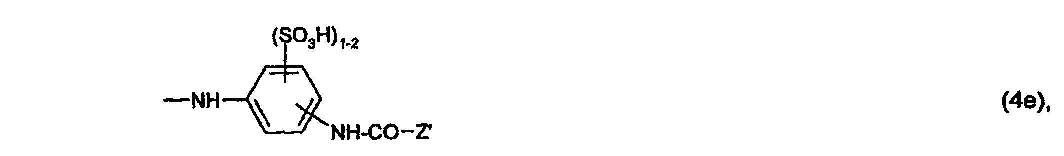 steht, worin
Z Vinyl oder einen Rest -CH₂-CH₂-U bedeutet und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist,
Z' für eine Gruppe -CH(Hal)-CH₂-Hal oder -C(Hal)=CH₂ steht,
m und n unabhängig voneinander die Zahl 2, 3 oder 4 sind, und
Hal Halogen ist.

Als Halogen kommt für R₃ z.B. Fluor, Chlor, Brom oder Jod, vorzugsweise Chlor oder Brom und insbesondere Chlor, in Betracht.

Als C₁-C₄-Alkyl kommt für R₃ z.B. Methyl, Ethyl, n-Propyl, Isopropyl, n-Butyl, sek.-Butyl, Isobutyl oder tert.-Butyl, vorzugsweise Methyl oder Ethyl und insbesondere Methyl, in Betracht.

Als C₁-C₄-Alkoxy kommt für R₃ z.B. Methoxy, Ethoxy, n-Propoxy, Isopropoxy, n-Butoxy, Isobutoxy oder tert.-Butoxy, vorzugsweise Methoxy oder Ethoxy und insbesondere Methoxy, in Betracht.

T steht für einen nicht-faserreaktiven Substituenten oder für einen faserreaktiven Rest der Formel (4a), (4b), (4c), (4d) oder (4e).

Steht T für einen nicht-faserreaktiven Substituenten, so bedeutet dieser Hydroxy; C₁-C₄-Alkoxy; gegebenenfalls durch Hydroxy, Carboxy oder Sulfo substituiertes C₁-C₄-Alkylthio; Amino; ein- oder zweifach durch C₁-C₈-Alkyl substituiertes Amino, wobei das Alkyl gegebenenfalls z.B. durch Sulfo, Sulfato, Hydroxy, Carboxy oder Phenyl, insbesondere durch Sulfo oder Hydroxy, weitersubstituiert ist und gegebenenfalls durch einen Rest -Ounterbrochen ist; Cyclohexylamino; Morpholino; N-C₁-C₄-Alkyl-N-phenylamino oder Phenylamino oder Naphthylamino, wobei das Phenyl oder Naphthyl gegebenenfalls durch C₁-C₄-Alkyl, C₁-C₄-Alkoxy, Carboxy, Sulfo oder Halogen substituiert ist.

Beispiele für geeignete nicht-faserreaktive Substituenten T sind Amino, Methylamino, Ethylamino, β-Hydroxyäthylamino, N-Methyl-N-β-Hydroxyethylamino, N-Ethyl-N-β-Hydroxyäthylamino, N,N-Di-β-Hydroxyäthylamino, β-Sulfoäthylamino, Cyclohexylamino, Morpholino, 2-, 3- oder 4-Chlorphenylamino, 2-, 3- oder 4-Methylphenylamino, 2-, 3- oder 4-Methoxyphenylamino, 2-, 3- oder 4-Sulfophenylamino, Disulfophenylamino, 2-, 3- oder 4-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-faserreaktiver Rest hat T vorzugsweise die Bedeutung C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Monooder N,N-Di-C₁-C₄-Alkylamino, Morpholino, gegebenenfalls im Phenylring durch Sulfo, Carboxy, Chlor, Methyl oder Methoxy substituiertes Phenylamino oder N-C₁-C₄-Alkyl-N-phenylamino, oder gegebenenfalls durch 1 bis 3 Sulfogruppen substituiertes Naphthylamino.

Besonders bevorzugte nicht-faserreaktive Reste T sind Amino, N-Methylamino, N-Ethylamino, N-β-Hydroxyethylamino, N-Methyl-N-β-Hydroxyethylamino, N-Ethyl-N-β-Hydroxyethylamino, N,N-Di-β-Hydroxyethylamino, β-Sulfoäthylamino, Morpholino, 2-, 3- oder 4-Carboxyphenylamino, 2-, 3- oder 4-Sulfophenylamino oder N-C₁-C₄-Alkyl-N-phenylamino.

Im Fall der faserreaktiven Reste T der Formeln (4a) und (4b) ist Z bevorzugt β-Chlorethyl. Im Fall der faserreaktiven Reste T der Formeln (4c) und (4d) ist Z bevorzugt Vinyl oder β-Sulfatoethyl.

Steht T für einen faserreaktiven Rest, so ist T vorzugsweise ein Rest der Formel (4c) oder (4d) und insbesondere der Formel (4c).

Hal in den faserreaktiven Resten der Formeln (3d), (3e) und (4e) steht bevorzugt für Chlor oder Brom, insbesondere Brom.

Y in dem faserreaktiven Rest der Formel (3f) ist z.B. Fluor, Chlor oder Brom, vorzugsweise Fluor oder Chlor und insbesondere Chlor.

Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Beispiele für geeignete Reste Z sind dementsprechend Vinyl, β-Brom- oder β-Chlorethyl, β-Acetoxyethyl, β-Benzoyloxyethyl, β-Phosphatoethyl, β-Sulfatoethyl und β-Thiosulfatoethyl. Z steht bevorzugt für Vinyl, β-Chlorethyl oder β-Sulfatoethyl.

Bevorzugt sind D₁ und D₂ unabhängig voneinander jeweils ein Rest der Formel (2a), (2b), (2c), (2d) oder (2e) 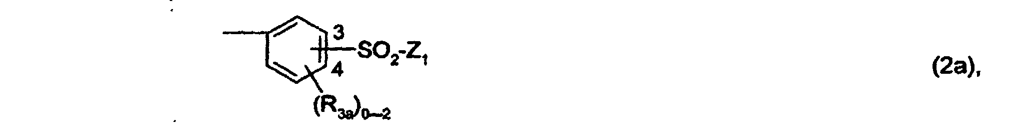 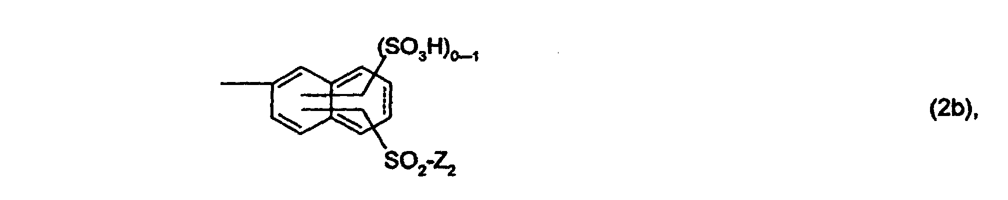 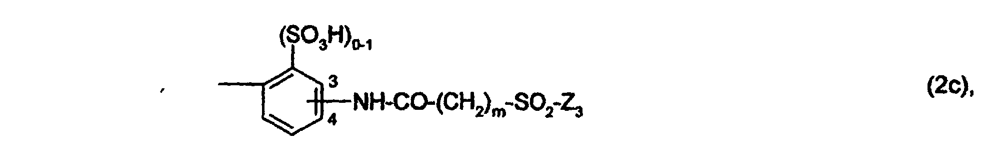 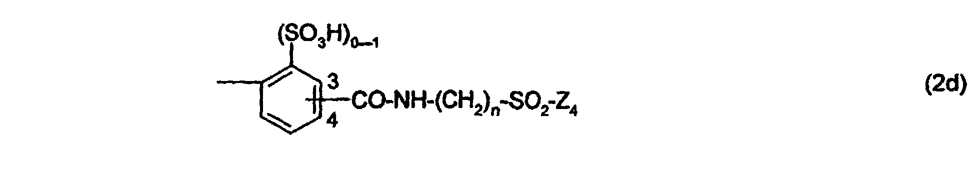 oder 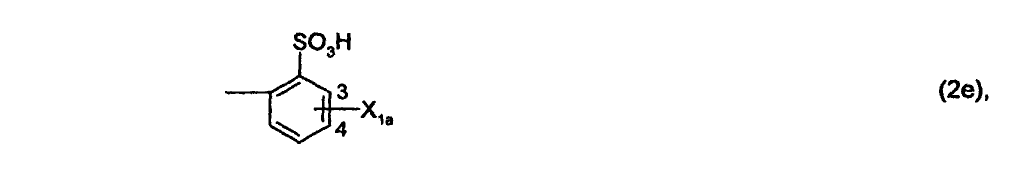 vorzugsweise der Formel (2a) oder (2e), worin
(R₃ₐ)₀₋₂ für 0 bis 2 gleiche oder voneinander verschiedene Substituenten ausgewählt aus der Gruppe Halogen, C₁-C₄-Alkyl, C₁-C₄-Alkoxy oder Sulfo, insbesondere Methyl, Methoxy oder Sulfo, steht,
X₁ₐ für α,β-Dibrompropionylamino oder α-Bromacryloylamino,
m die Zahl 2 oder 3, insbesondere 3,
n die Zahl 2 oder 3, insbesondere 2, und
Z₁, Z₂, Z₃ und Z₄ unabhängig voneinander Vinyl, β-Chlorethyl oder β-Sulfatoethyl bedeuten.

Z, und Z₂ sind bevorzugt unabhängig voneinander Vinyl oder β-Sulfatoethyl.

Z₃ ist bevorzugt β-Chlorethyl oder β-Sulfatoethyl, insbesondere β-Chlorethyl.

Z₄ ist bevorzugt β-Chlorethyl oder β-Sulfatoethyl, insbesondere β-Sulfatoethyl.

Bevorzugt sind Farbstoffmischungen, worin
D₁ und D₂ unabhängig voneinander jeweils ein Rest der Formel (2a), (2b), (2c), (2d) oder (2e), vorzugsweise der Formel (2a) oder (2e), und
R₁ und R₂ Wasserstoff bedeuten.

Ein weiterer Gegenstand der vorliegenden Erfindung sind Farbstoffe der Formel (1) 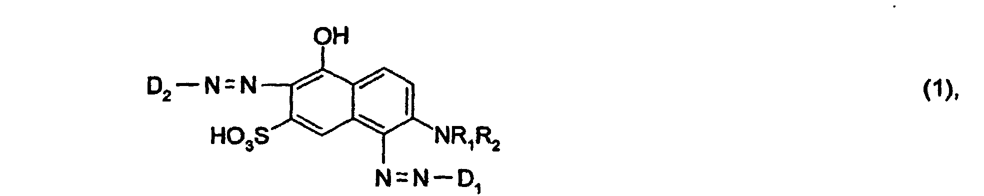 worin
R₁ und R₂ Wasserstoff bedeuten, und
D₁ und D₂ unabhängig voneinander je für einen Rest der Formel (2) 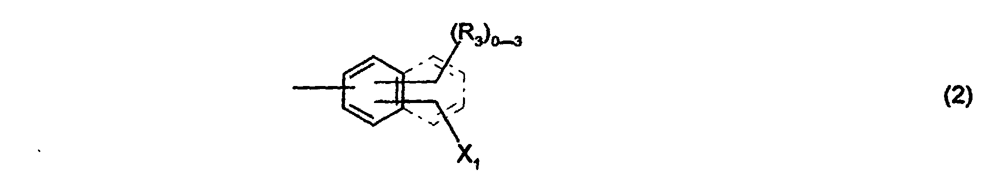 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3b), (3c), (3d), (3e) oder (3f)

-NH-CO-(CH₂)ₘ-SO₂-Z (3b),

-CONH-(CH₂)ₙ-SO₂-Z (3c),

-NH-CO-CH(Hal)-CH₂-Hal (3d),

-NH-CO-C(Hal)=CH₂ (3e)

oder 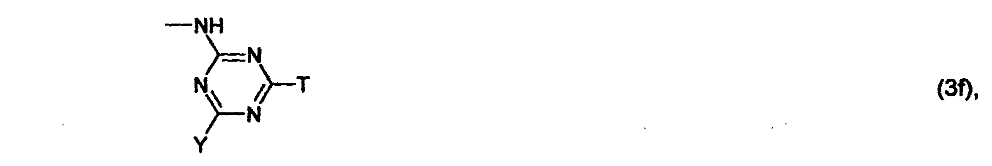 bedeutet, worin Y, T, Z, Hal, m und n die oben angegebenen Bedeutungen haben.

Die Reste D₁ und D₂ in den Farbstoffen der Formel (1) sind identisch oder nicht identisch.

Einen weiteren Gegenstand der vorliegenden Erfindung betrifft ein Verfahren zur Herstellung der Farbstoffe der Formel (1), dadurch gekennzeichnet, dass man
(i) etwa 1 Moläquivalent eines Amins der Formel (5a)

   D₁-NH₂ (5a)

   in üblicher Weise diazotiert und mit etwa 1 Moläquivalent einer Verbindung der Formel (6) 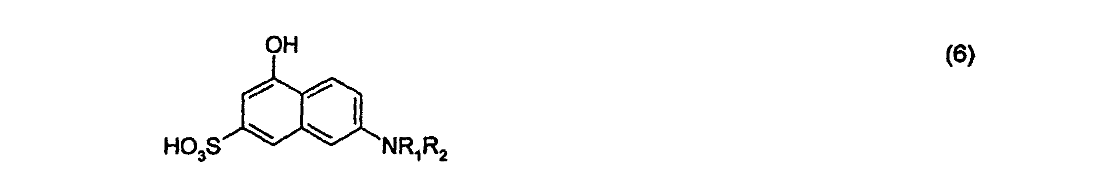 zur Verbindung der Formel (7a) 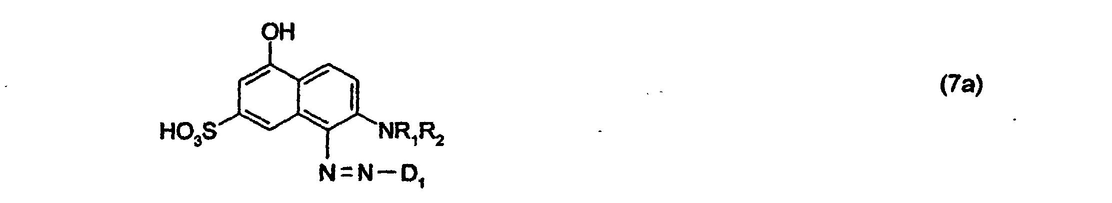 umsetzt; und
(ii) etwa 1 Moläquivalent eines Amins der Formel (5b)

   D₂-NH₂ (5b)
in üblicher Weise diazotiert und mit etwa 1 Moläquivalent der gemäss (i) erhaltenen Verbindung der Formel (7a) zur Verbindung der Formel (1) umsetzt, worin für D₁, D₂, R₁ und R₂ jeweils die zuvor genannten Bedeutungen und Bevorzugungen gelten.

Die Diazotierung der Amine der Formeln (5a) und (5b) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 0 bis 20°C.

Die Kupplung auf die Kupplungskomponenten der Formeln (6) und (7a) erfolgt in an sich bekannter Weise, bei sauren, neutralen bis schwach alkalischen pH-Werten, z.B. einem pH-Wert von 0 bis 8 und Temperaturen von beispielsweise -5 bis 40°C, vorzugsweise 0 bis 30°C.

Dabei findet die erste Kupplung -(i)- in einem sauren Medium, z.B. einem pH-Wert von 0 bis 4, und die zweite Kupplung -(ii)- bei erhöhten pH-Werten, in einem schwach sauren, neutralen oder schwach alkalischen Medium, z.B. einem pH-Wert von 4 bis 8, statt.

Verfährt man wie zuvor beschrieben, verwendet jedoch in den Verfahrensschritten (i) und (ii) anstelle von jeweils etwa 1 Moläquivalent eines Amins der Formeln (5a) und (5b) jeweils etwa 1 Moläquivalent einer Mischung von mindestens zwei, vorzugsweise zwei, nicht identischen Aminen, z.B. einer 1:1 molaren Mischung der Verbindungen der Formeln (5a) und (5b), so erhält man zunächst, gemäss (i), eine Mischung der Verbindungen der Formeln (7a) und (7b) 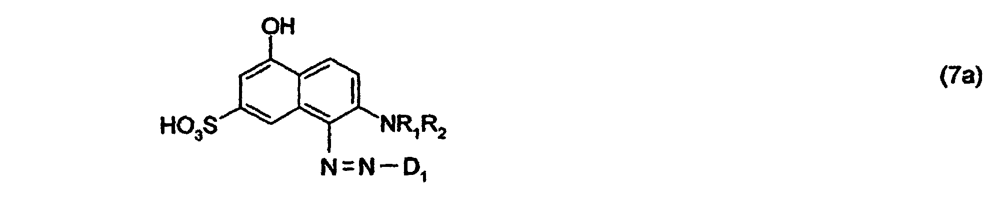 und 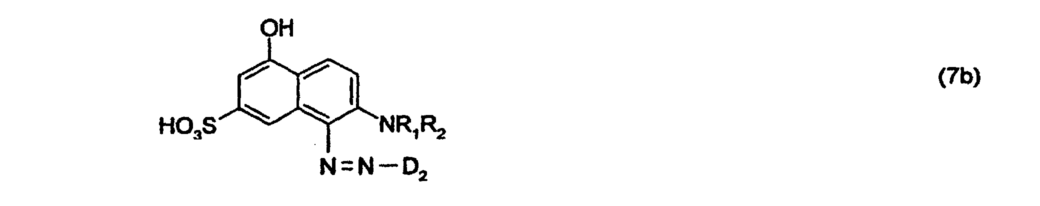 und bei weiterer Umsetzung der Mischung der Verbindungen der Formeln (7a) und (7b), gemäss (ii), eine Mischung von Farbstoffen der Formeln (1a), (1b), (1c) und (1d) 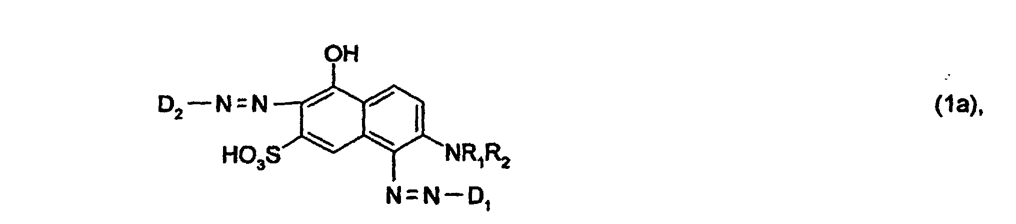 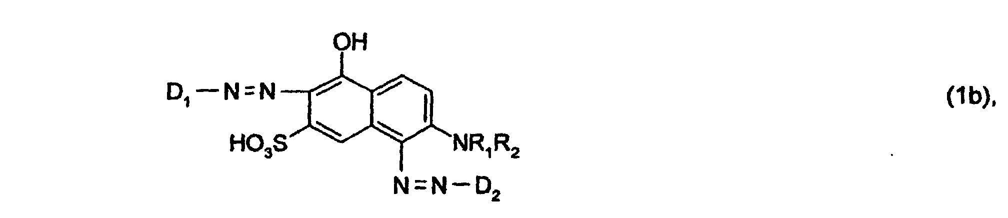 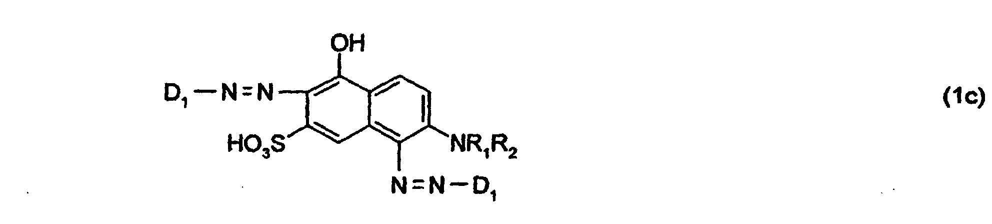 und

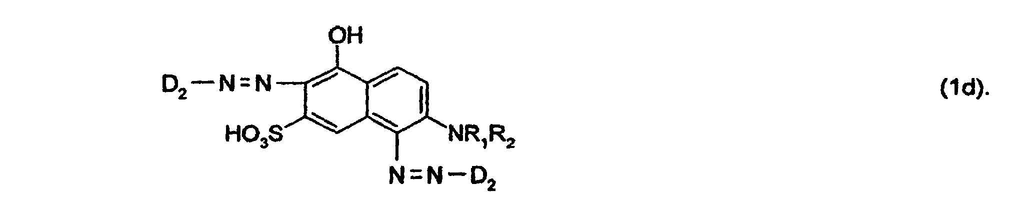

Die erfindungsgemässen Farbstoffmischungen enthalten mindestens einen Farbstoff der Formeln (1a) und (1b) zusammen mit mindestens einem Farbstoff der Formeln (1c) und (1d), insbesondere jeweils einen Farbstoff der Formeln (1a), (1b), (1c) und (1d), worin für D₁, D₂, R₁ und R₂ jeweils die zuvor genannten Bedeutungen und Bevorzugungen gelten und D₁ und D₂ nicht identisch sind.

In den erfindungsgemässen Farbstoffmischungen bedeuten vorzugsweise D₁ einen Rest der Formel (2a*) 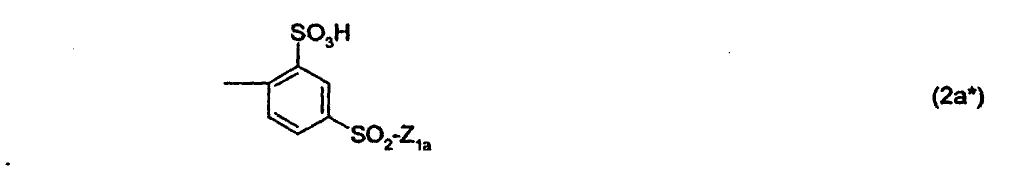 und D₂ einen Rest der Formel (2a**) 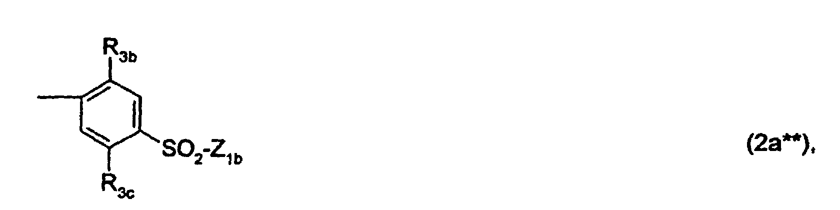 worin
R_{3b} und R_{3c} unabhängig voneinander je Wasserstoff, Methyl oder Methoxy, insbesondere Wasserstoff, und
Z₁ₐ und Z_{1b} unabhängig voneinander je Vinyl oder β-Sulfatoethyl, insbesondere β-Sulfatoethyl, sind, und
R₁ und R₂ Wasserstoff.

Das Verhältnis der Farbstoffe der Formeln (1a), (1b), (1c) und (1d) in der Mischung kann in weiten Bereichen varieren und hängt dabei vom Verhältnis der jeweils gemäss (i) und (ii) eingesetzten Amine D₁-NH₂ und D₂-NH₂ ab.

Die obigen Farbstoffmischungen enthalten z.B. 5 bis 95 Gew.%, insbesondere 10 bis 90 Gew.% und vorzugsweise 20 bis 80 Gew.% eines Farbstoffs der Formel (1a) und/oder (1b), bezogen auf die Gesamtmenge der Farbstoffe der Formeln (1a), (1b), (1c) und (1d) in der Mischung.

Die Verbindungen der Formeln (5a), (5b) und (6) sind bekannt oder können in an sich bekannter Weise erhalten werden.

Einen Gegenstand der vorliegenden Erfindung stellen weiterhin Farbstoffmischungen dar, die mindestens einen Farbstoff der Formel (1) 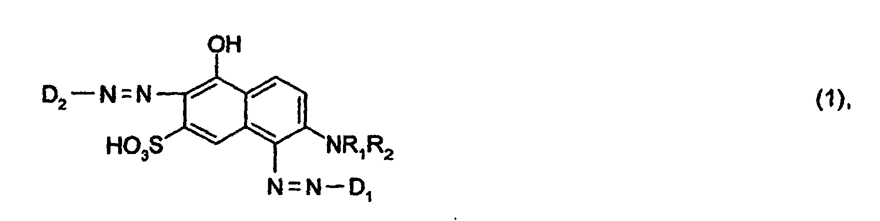 worin
R₁ und R₂ Wasserstoff bedeuten, und
D₁ und D₂ unabhängig voneinander je für einen Rest der Formel (2) 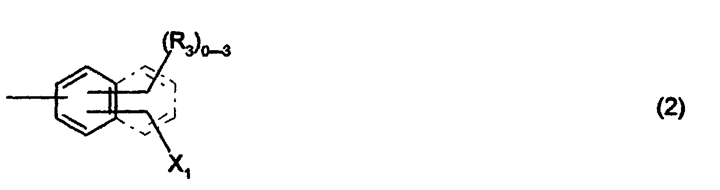 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3a), (3b), (3c), (3d), (3e) oder (3f)

-SO₂-Z (3a),

-NH-CO-(CH₂)ₘ-SO₂-Z (3b),

-CONH-(CH₂)ₙ-SO₂-Z (3c),

-NH-CO-CH(Hal)-CH₂-Hal (3d),

-NH-CO-C(Hal)=CH₂ (3e)

oder 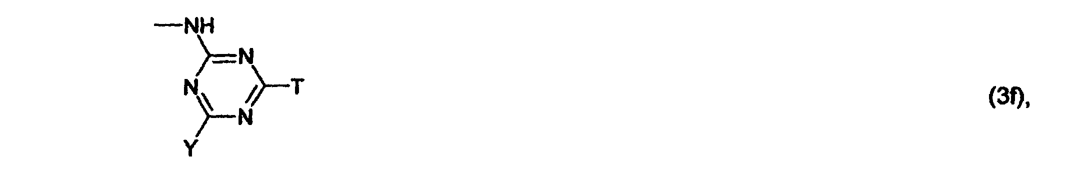 bedeutet, worin Y, T, Z, Hal, m und n die oben angegebenen Bedeutungen haben, zusammen mit mindestens einem Farbstoff der Formel (8) 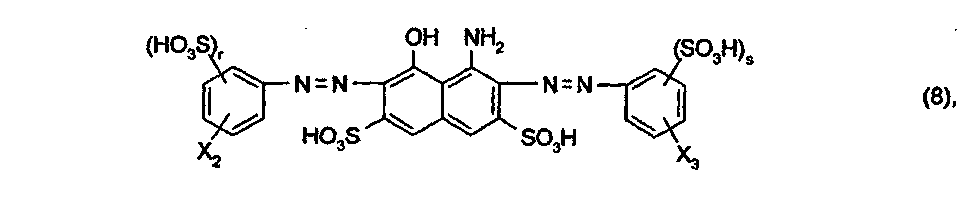 enthalten, worin
r und s unabhängig voneinander je die Zahl 0 oder 1 und
X₂ und X₃ unabhängig voneinander je einen Rest der Formel (3a), (3b), (3c) oder (3d)

-SO₂-Z (3a);

-CONH-(CH₂)ₙ-SO₂-Z (3b),

-NH-CO-CH(Hal)-CH₂-Hal (3c)

oder

-NH-CO-C(Hal)=CH₂ (3d)

bedeuten, und
n die Zahl 2, 3 oder 4 ist,
Hal Halogen und
Z Vinyl oder einen Rest -CH₂-CH₂-U bedeutet und U eine alkalisch abspaltbare Gruppe ist.

Für n, Hal und U gelten jeweils die zuvor genannten Bedeutungen und Bevorzugungen.

Die Reaktivfarbstoffe der Formel (1) und (8) enthalten Sulfogruppen, welche jeweils entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vorliegen.

Die Reaktivfarbstoffe der Formeln (1) und (8) und somit auch die Farbstoffgemische können weitere Zusätze, z.B. Kochsalz oder Dextrin, enthalten.

Bevorzugt enthalten die erfindungsgemässen Farbstoffmischungen anstelle des Farbstoffs der Formel (1) die zuvor genannten Mischungen aus mindestens einem Farbstoff der Formeln (1a) und (1b) zusammen mit mindestens einer Farbstoff der Formeln (1c) und (1d), insbesondere jeweils eine Verbindung der Formeln (1a), (1b), (1c) und (1d), wobei für die Reste D₁, D₂, R₁ und R₂ in den Verbindungen der Formeln (1a), (1b), (1c) und (1d) die zuvor genannten Bedeutungen und Bevorzugungen gelten

Der Farbstoff der Formel (8) in der erfindungsgemässen Farbstoffmischung ist vorzugsweise ein Farbstoff der Formel (8a), (8b) oder (8c) 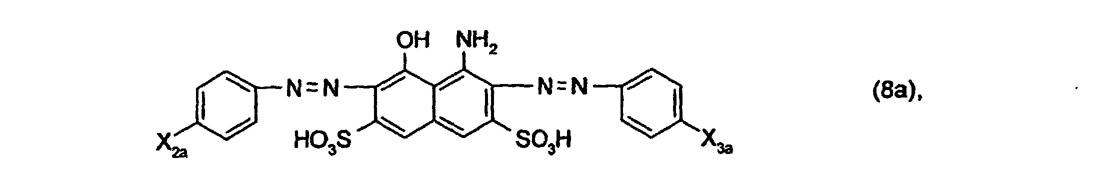 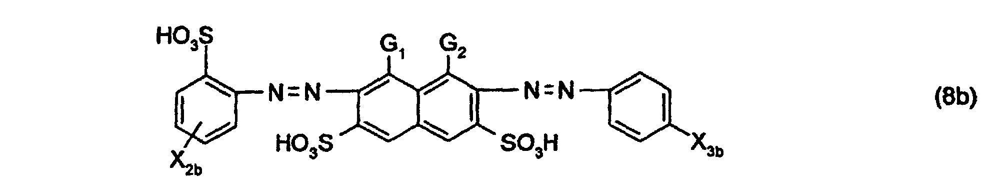 oder 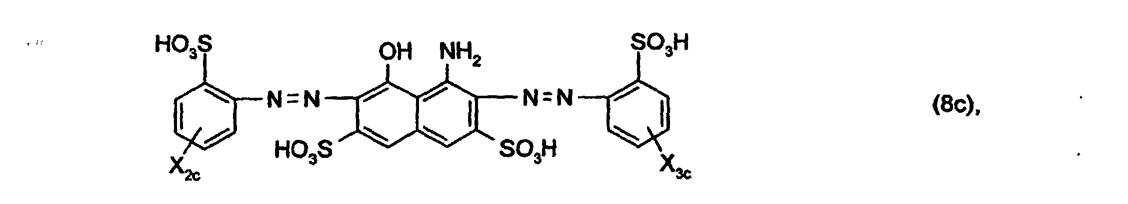 insbesondere der Formel (8a), worin
einer der Substituenten G₁ und G₂ Amino und der andere Hydroxy bedeutet,
X₂ₐ, X₃ₐ und X_{3b} unabhängig voneinander β-Sulfatoethylsulfonyl oder Vinylsulfonyl und
X_{2b}, X_{2c} und X_{3c} unabhängig voneinander α,β-Dibrompropionylamino oder α-Bromacryloylamino sind.

Besonders bevorzugt enthalten die erfindungsgemässen Farbstoffmischungen jeweils eine Verbindung der Formeln (1a) (1b), (1c) und (1d) zusammen mit einem Farbstoff der Formel (8a).

Der Farbstoff der Formel (1) bzw. die Farbstoffe der Formeln (1a), (1b), (1c) und (1d) liegen in dem erfindungsgemässen Farbstoffgemisch zu dem Farbstoff der Formel (8) z.B. im Gewichtsverhältnis von 1:99 bis 99:1, vorzugsweise 5:95 bis 95:5 und besonders bevorzugt 10:90 bis 90:10, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetem oder Mixem.

Die erfindungsgemässen Farbstoffmischungen können neben den oben genannten Reaktivfarbstoffen weitere Farbstoffe, insbesondere weitere Reaktivfarbstoffe zur Nuancierung, enthalten.

Die erfindungsgemässen Farbstoffe und Farbstoffmischungen sind faserreaktiv, d.h. sie vermögen mit den Hydroxylgruppen der Cellulose oder mit den reaktiven Zentren von natürlichen und synthetischen Polyamiden unter Bildung kovalenter chemischer Bindungen zu reagieren.

Die erfindungsgemässen Reaktivfarbstoffe sowie die erfindungsgemässen Mischungen von Reaktivfarbstoffen eignen sich zum Färben und Bedrucken der verschiedensten Materialien, insbesondere hydroxylgruppenhaltigen oder stickstoffhaltigen Fasermaterialien. Beispiele sind Seide, Leder, Wolle, Polyamidfasern und Polyurethane sowie insbesondere cellulosehaltige Fasermaterialien aller Art. Solche Fasermaterialien sind beispielsweise die natürliche Cellulosefaser, wie Baumwolle, Leinen und Hanf, sowie Zellstoff und regenerierte Cellulose. Die erfindungsgemässen Farbstoffe und Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasem.

Die erfindungsgemässen Farbstoffe und Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und Farbstoffmischungen eignen sich auch zum Druck, vor allem auf Baumwolle, ebenso aber auch zum Bedrucken von stickstoffhaltigen Fasem, z.B. von Wolle, Seide oder Wolle enthaltenden Mischgeweben.

Die mit den erfindungsgemässen Farbstoffen und Farbstoffmischungen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere Chlorechtheit.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

Beispiel 1: 28,1 Teile eines Amins der Formel D₁₀-NH₂, worin D₁₀ einen Rest der Formel 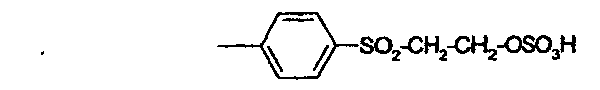 bedeutet, werden in 200 Teile Wasser eingetragen und gut verrührt. Bei ca. 10 bis 20°C gibt man zu der erhaltenen Suspension 17 Teile konz. Salzsäure, kühlt auf 0 bis 5°C und tropft langsam 6,9 Teile Natriumnitrit, gelöst in 25 Teilen Wasser, zu. Nachdem die Umsetzung des Amins zur entsprechenden Diazoverbindung komplett ist, wird das überschüssige Nitrit durch Zugabe von Sulfaminsäure zerstört.

Beispiel 2: 36,2 Teile eines Amins der Formel D₁₁-NH₂, worin D₁₁ einen Rest der Formel 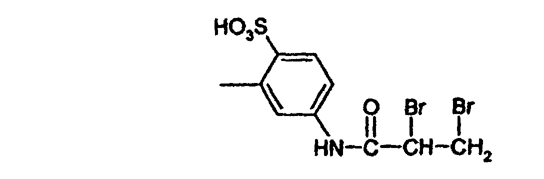 bedeutet, werden in 400 Teile Wasser eingetragen und gut verrührt. Bei ca. 10 bis 20°C gibt man zu der erhaltenen Suspension 29 Teile konz. Salzsäure, kühlt auf 0 bis 5°C und tropft langsam 6,2 Teile Natriumnitrit, gelöst in 22,5 Teilen Wasser, zu. Nachdem die Umsetzung des Amins zur entsprechenden Diazoverbindung komplett ist, wird das überschüssige Nitrit durch Zugabe von Sulfaminsäure zerstört.

Beispiele 3 bis 17: Analog der in den Beispielen 1 oder 2 beschriebenen Vorgehensweise lassen sich die Diazoverbindungen der in Tabelle 1 genannten Amine herstellen, wenn man anstelle der in den Beispielen 1 oder 2 genannten Amine der Formel D₁₀-NH₂ oder D₁₁-NH₂ eine äquimolare Menge der in der Tabelle 1 genannten Amine der Formel D_{xy}-NH₂ verwendet.

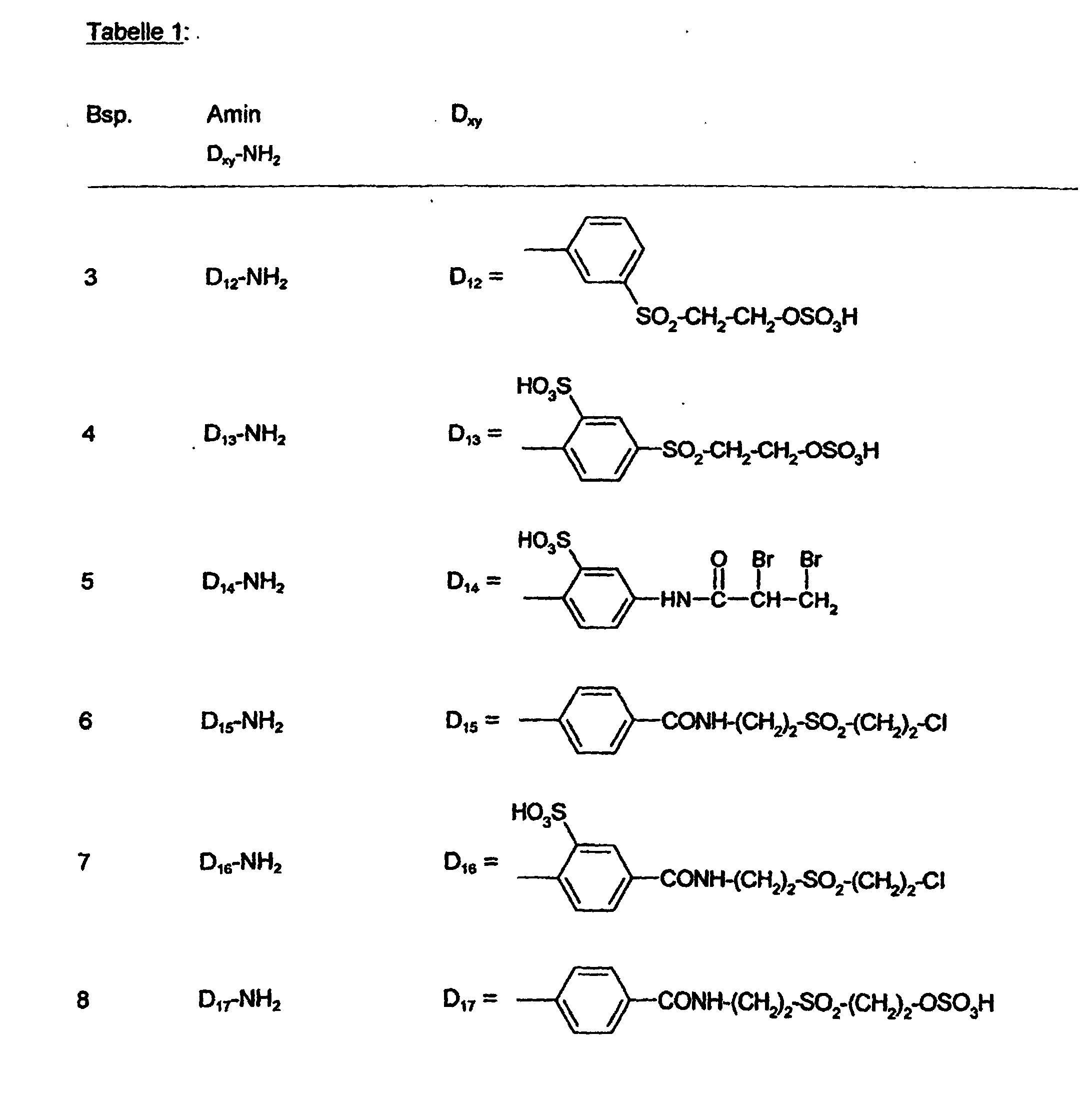

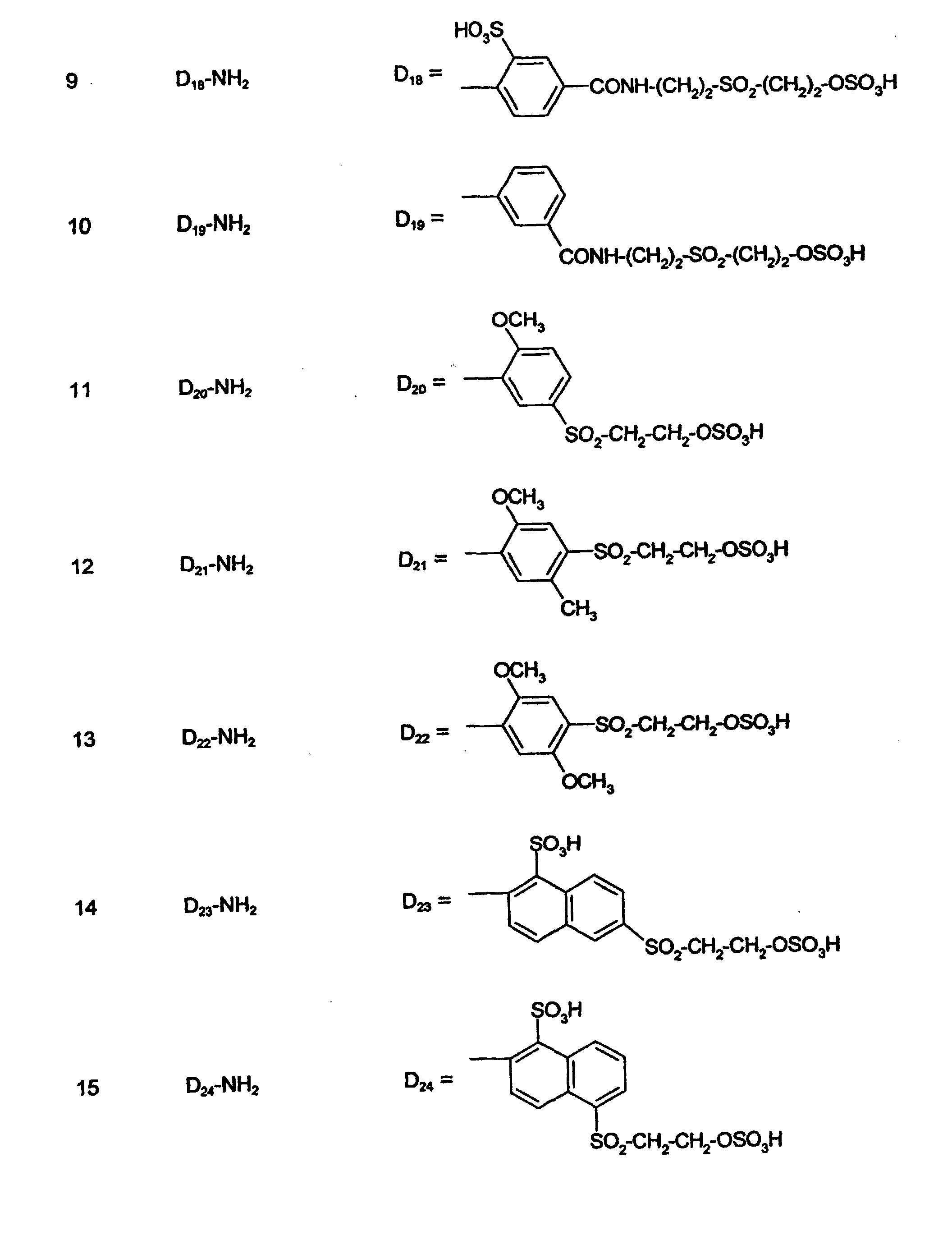

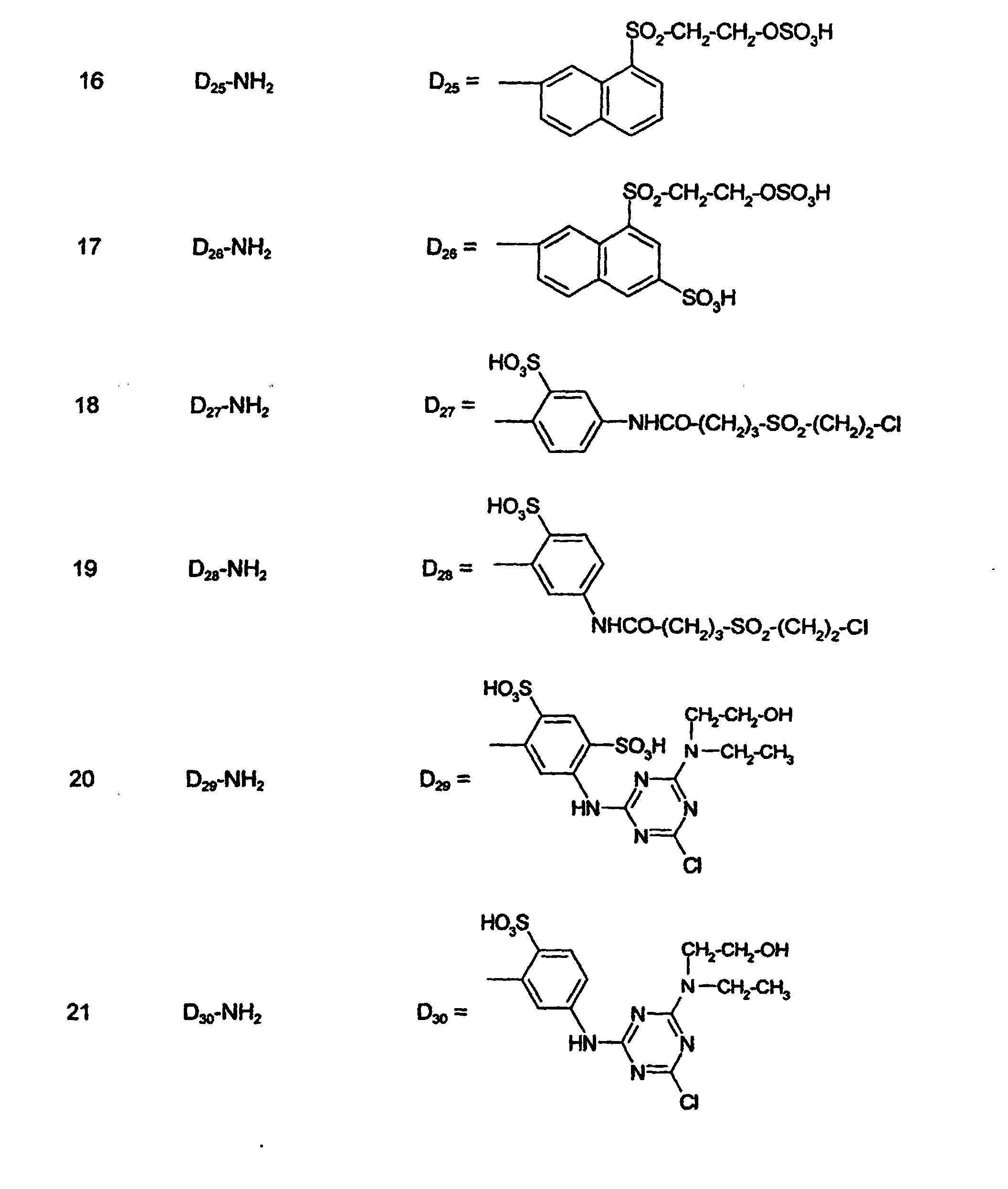

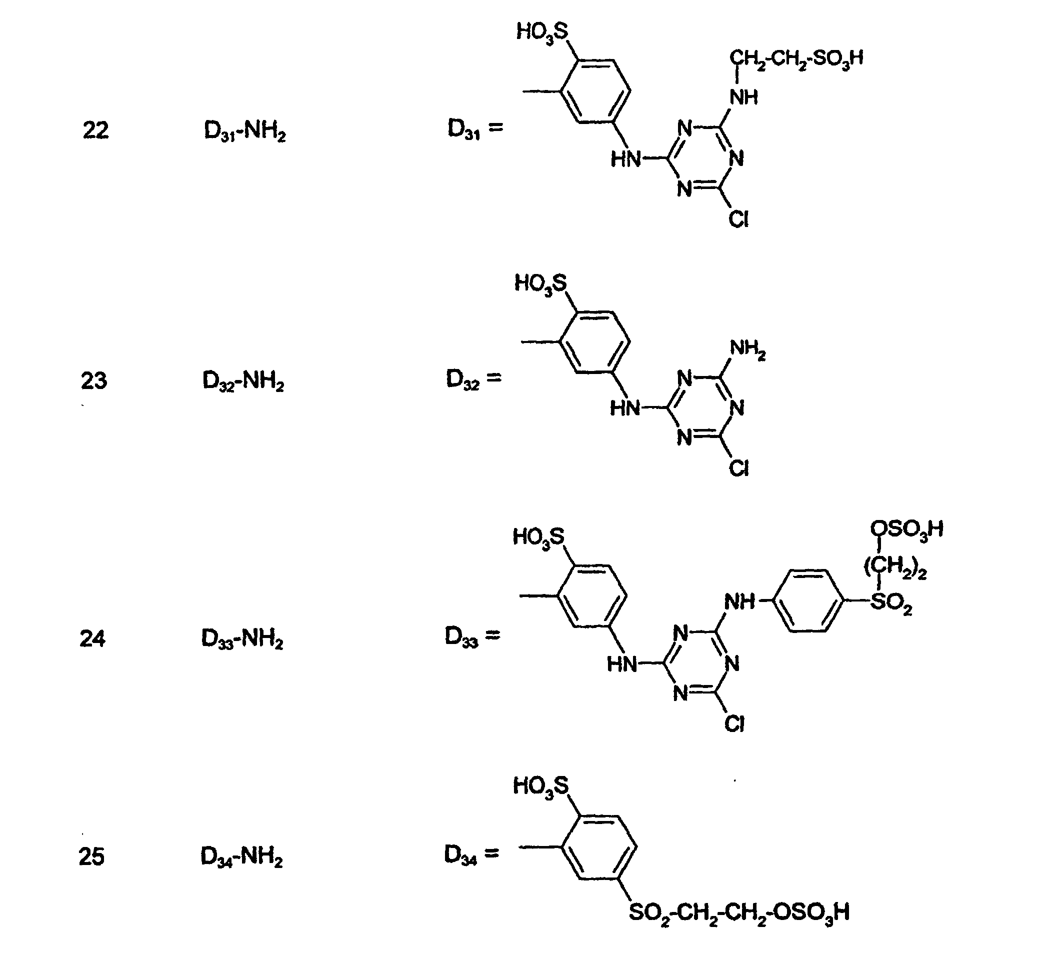

Erläuterungsbeispiel 26: Zur gemäss Beispiel 1 erhaltenen sauren Suspension der Diazoverbindung wird eine Lösung von 21,5 Teilen 2-Amino-5-naphthol-7-sulfonsäure in 250 Teilen Wasser (pH 7) bei 0 bis 5°C zugetropft. Man lässt anschliessend auf Raumtemperatur erwärmen und rührt ca. 5 h bis zur vollständigen Kupplung (1. Kupplung). Danach wird das Reaktionsgemisch auf 5 bis 10°C gekühlt, der pH-Wert mit einer wässrigen Natriumhydrogencarbonatlösung auf ca. 4,5 erhöht und die gemäss Beispiel 2 erhaltene Suspension der Diazoverbindung langsam zugetropft, wobei der pH-Wert während des Zutropfens durch Zugabe einer wässrigen Natriumhydrogencarbonatlösung bei ca. 4,5 und die Temperatur bei ca. 5°C gehalten wird. Nach dem Zutropfen wird der pH-Wert auf 6 gestellt (2. Kupplung). Nach beendeter Kupplung wird die Farbstofflösung dialytisch von Salz befreit und im Vakuum eingedampft. Man erhält eine Verbindung, die in Form der freien Säure der Formel (101) 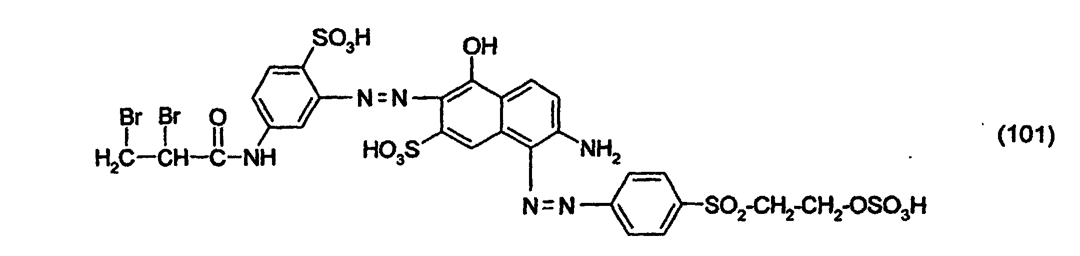 entspricht, welche Cellulose in scharlachrotem Farbton mit guten Allgemeinechtheiten färbt.

Beispiele 27 bis 44: Analog der in Erläuterungsbeispiel 26 beschriebenen Vorgehensweise lassen sich aus den in den Beispielen 1 bis 25 beschriebenen Diazoverbindungen die Farbstoffe der folgenden allgemeinen Formel 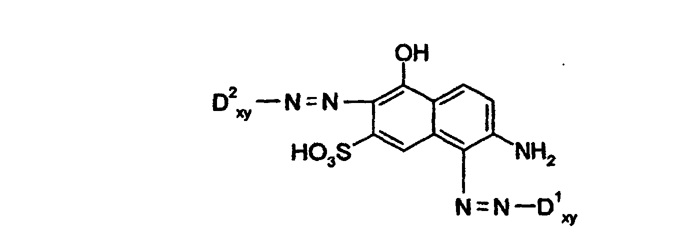 herstellen, worin D¹_{xy} und D²_{xy} jeweils den in Tabelle 2 aufgeführten Resten entsprechen und diesen Resten die in Tabelle 1 genannten Bedeutungen zukommen. Die Farbstoffe färben Cellulose in den in Tabelle 2 angegebenen Farbtönen mit guten Allgemeinechtheiten.

**Tabelle 2:**

| Bsp. | D¹_{xy} 1. Kupplung | D²_{xy} 2. Kupplung | Farbton |
|---|---|---|---|
| 27 | D₁₁ | D₁₁ | scharlachrot |
| 28 | D₁₄ | D₁₄ | scharlachrot |
| 29 | D₁₅ | D₁₅ | scharlachrot |
| 30 | D₁₆ | D₁₆ | scharlachrot |
| 31 | D₁₇ | D₁₇ | scharlachrot |
| 32 | D₁₈ | D₁₈ | scharlachrot |
| 33 | D₁₉ | D₁₉ | scharlachrot |
| 34 | D₁₄ | D₁₁ | scharlachrot |
| 35 | D₂₉ | D₃₂ | scharlachrot |
| 36 | D₂₉ | D₃₀ | scharlachrot |
| 37 | D₂₉ | D₃₁ | scharlachrot |
| 38 | D₃₃ | D₃₃ | scharlachrot |
| 39 | D₂₈ | D₂₈ | scharlachrot |
| 40 | D₂₈ | D₂₇ | scharlachrot |
| 41 | D₁₁ | D₃₁ | scharlachrot |
| 42 | D₃₁ | D₁₁ | scharlachrot |
| 43 | D₃₃ | D₁₁ | scharlachrot |
| 44 | D₃₁ | D₃₁ | scharlachrot |

Beispiel 45: Eine Mischung aus 14,1 Teilen eines Amins der Formel D₁₀-NH₂ und 18,1 Teilen eines Amins der Formel D₁₃-NH₂, worin D₁₀ und D₁₃ jeweils die in Beispiel 1 und Tabelle 1 angegebenen Bedeutungen haben, werden in 200 Teile Wasser eingetragen und gut verrührt. Bei ca. 10 bis 20°C gibt man zu der erhaltenen Suspension 17 Teile konz. Salzsäure, kühlt auf 0 bis 5°C und tropft langsam 6,9 Teile Natriumnitrit, gelöst in 25 Teilen Wasser, zu. Nachdem die Umsetzung der Amine zu den entsprechenden Diazoverbindungen komplett ist, wird das überschüssige Nitrit durch Zugabe von Sulfaminsäure zerstört.

Beispiel 46: Zur gemäss Beispiel 45 erhaltenen sauren Suspension der Diazoverbindungen wird eine Lösung von 21,5 Teilen 2-Amino-5-naphthol-7-sulfonsäure in 250 Teilen Wasser (pH 7) bei 0 bis 5°C zugetropft. Man lässt anschliessend auf Raumtemperatur erwärmen und rührt ca. 5 h bis zur vollständigen Kupplung. Danach wird das Reaktionsgemisch auf 5 bis 10°C gekühlt, der pH-Wert mit einer wässrigen Natriumhydrogencarbonatlösung auf ca. 4,5 erhöht und abermals die gemäss Beispiel 45 erhaltene Suspension der Diazoverbindungen langsam zugetropft, wobei der pH-Wert während des Zutropfens durch Zugabe einer wässrigen Natriumhydrogencarbonatlösung bei ca. 4,5 und die Temperatur bei ca. 5°C gehalten wird. Nach dem Zutropfen wird der pH-Wert auf 6 gestellt Nach beendeter Kupplung wird die Farbstofflösung dialytisch von Salz befreit und im Vakuum eingedampft. Man erhält eine Mischung von Verbindungen, die in Form der freien Säure den Formeln (102), (103), (104) und (105) 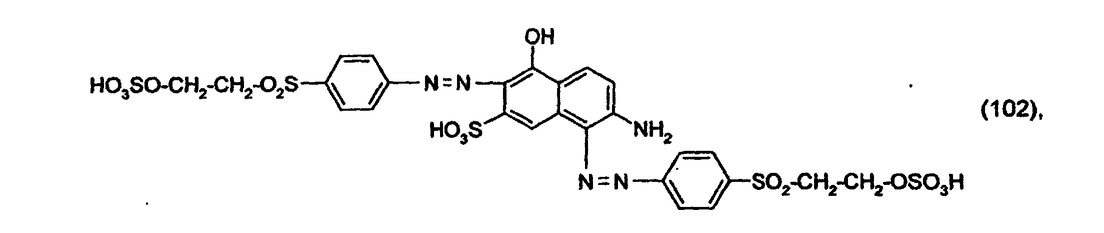 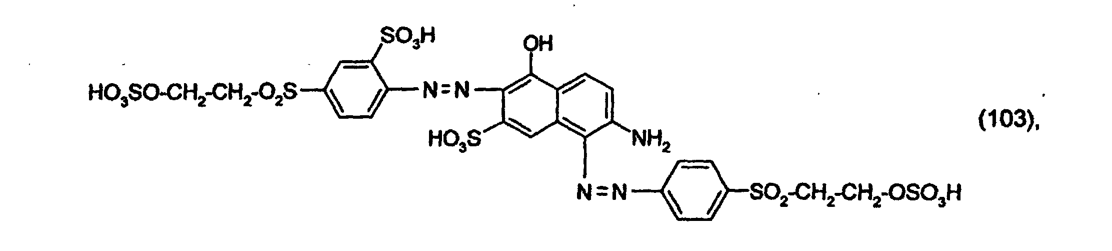 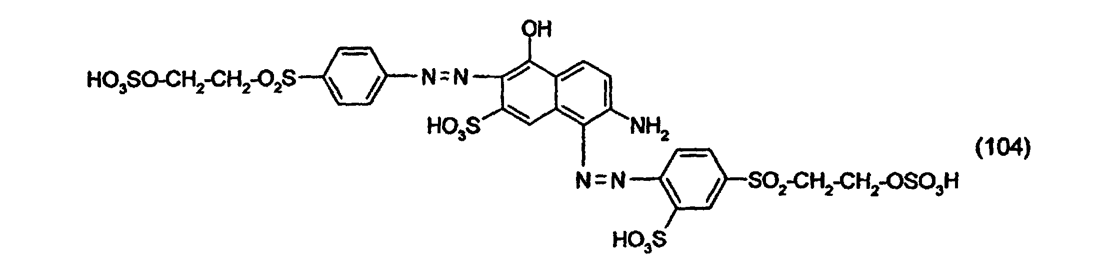 und 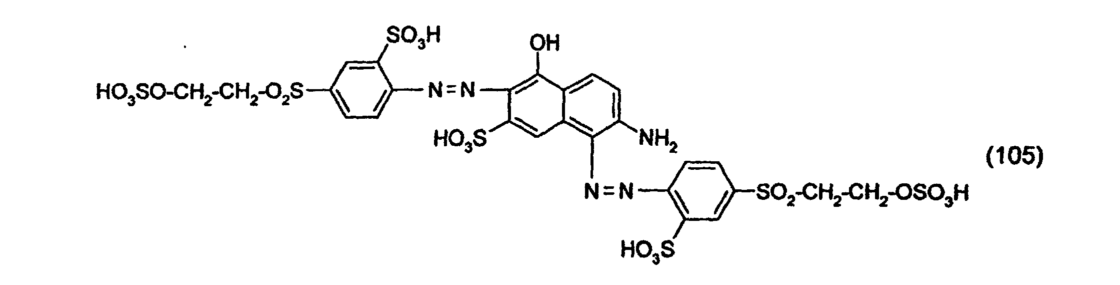 entsprechen, welche Cellulose in scharlachrotem Farbton mit guten Allgemeinechtheiten färben.

Beispiele 47 bis 81: Analog der in Beispiel 45 beschriebenen Vorgehensweise lassen sich aus den 1:1 molaren Mischungen aus jeweils zwei verschiedenen Aminen der Formeln D¹_{xy}-NH₂ und D²_{xy}-NH₂ die entsprechenden Diazoverbindungen herstellen und aus diesen Diazoverbindungen analog der in Beispiel 46 beschriebenen Vorgehensweise Mischungen von Farbstoffen der folgenden allgemeinen Formeln 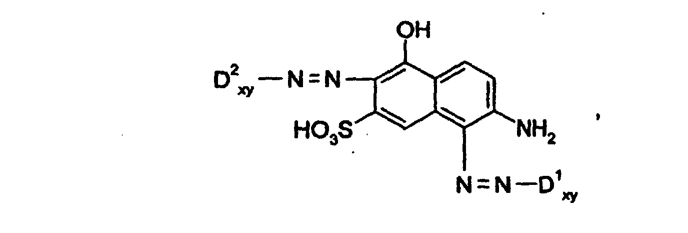 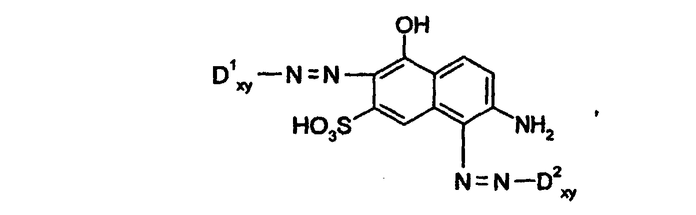 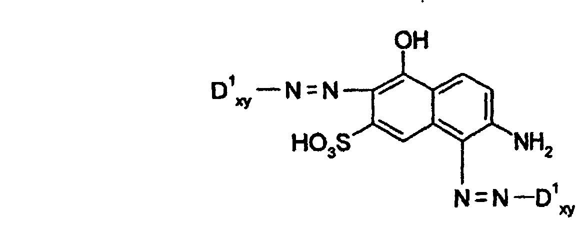 und 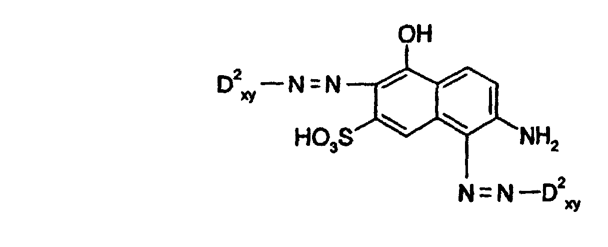 erhalten, worin D¹_{xy} und D²_{xy} jeweils den in Tabelle 3 aufgeführten Resten entsprechen und diesen Resten die in Tabelle 1 genannten Bedeutungen zukommen. Die Farbstoffe färben Cellulose in den in Tabelle 3 angegebenen Farbtönen mit guten Allgemeinechtheiten.

**Tabelle 3:**

| Bsp. | D¹_{xy} | D²_{xy} | Farbton |
|---|---|---|---|
| 47 | D₁₀ | D₁₂ | scharlachrot |
| 48 | D₁₀ | D₁₄ | scharlachrot |
| 49 | D₁₀ | D₁₅ | scharlachrot |
| 50 | D₁₀ | D₁₆ | scharlachrot |
| 51 | D₁₀ | D₁₇ | scharlachrot |
| 52 | D₁₀ | D₁₈ | scharlachrot |
| 53 | D₁₀ | D₁₉ | scharlachrot |
| 54 | D₁₀ | D₂₀ | scharlachrot |
| 55 | D₁₀ | D₂₁ | scharlachrot |
| 56 | D₁₀ | D₂₂ | scharlachrot |
| 57 | D₁₀ | D₂₃ | scharlachrot |
| 58 | D₁₀ | D₂₄ | scharlachrot |
| 59 | D₁₀ | D₂₅ | scharlachrot |
| 60 | D₁₀ | D₂₆ | scharlachrot |
| 61 | D₁₁ | D₁₂ | scharlachrot |
| 62 | D₁₁ | D₁₃ | scharlachrot |
| 63 | D₁₁ | D₁₄ | scharlachrot |
| 64 | D₁₁ | D₁₉ | scharlachrot |
| 65 | D₁₁ | D₂₀ | scharlachrot |
| 66 | D₁₂ | D₁₃ | scharlachrot |
| 67 | D₁₂ | D₂₃ | scharlachrot |
| 68 | D₁₃ | D₁₄ | scharlachrot |
| 69 | D₁₃ | D₁₉ | scharlachrot |
| 70 | D₁₃ | D₂₀ | scharlachrot |
| 71 | D₁₃ | D₂₁ | scharlachrot |
| 72 | D₁₃ | D₂₂ | scharlachrot |
| 73 | D₁₄ | D₁₇ | scharlachrot |
| 74 | D₁₄ | D₁₈ | scharlachrot |
| 75 | D₁₄ | D₁₉ | scharlachrot |
| 76 | D₁₄ | D₂₀ | scharlachrot |
| 77 | D₁₄ | D₂₁ | scharlachrot |
| 78 | D₁₄ | D₂₃ | scharlachrot |
| 79 | D₁₄ | D₂₄ | scharlachrot |
| 80 | D₁₇ | D₁₉ | scharlachrot |
| 81 | D₁₈ | D₁₉ | scharlachrot |

Färbebeispiel 82: In ein Färbebad, welches 0,75 Teile der Farbstoffmischung gemäss Beispiel 46, 0,75 Teile des Farbstoffs der Formel (106) 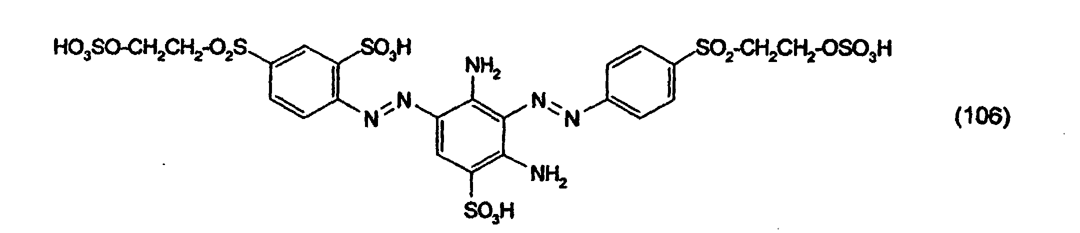 und 3,5 Teile des Farbstoffs der Formel (107) 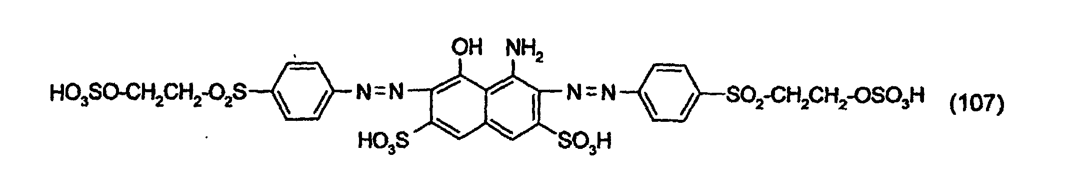 und 30 Teile Natriumchlorid in 1000 Teilen Wasser enthält, geht man bei einer Temperatur von 30°C mit 100 Teilen eines Baumwollgewebes ein. Die Temperatur des Färbebades wird innerhalb von 30 Minuten auf 90°C erhöht und weitere 45 Minuten gehalten. Anschliessend wird die Temperatur innerhalb von ca. 15 Minuten auf 70°C gesenkt, es werden 15 Teile kalziniertes Soda zugegeben, und die Temperatur des Färbebades wird weitere 45 Minuten bei 70°C gehalten. Danach wird das gefärbte Gewebe in üblicher Weise gespült und getrocknet. Man erhält ein schwarz gefärbtes Baumwollgewebe mit guten Allgemeinechtheiten.

Färbevorschrift I: 2 Teile des gemäss Erläuterungbeispiel 26 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Erläuterungbeispiel 26 erhaltenen Reaktivfarbstoffs werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Erläuterungbeispiel 26 erhaltenen Reaktivfarbstoffs werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Erläuterungbeispiel 26 erhaltenen Reaktivfarbstoffs werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Erläuterungbeispiel 26 erhaltenen Reaktivfarbstoffs werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Erläuterungbeispiel 26 erhaltenen Reaktivfarbstoffs werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I: 3 Teile des gemäss Erläuterungbeispiel 26 erhaltenen Reaktivfarbstoffs werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Erläuterungbeispiel 26 erhaltenen Reaktivfarbstoffs werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Farbstoffmischungen enthaltend
mindestens eine Verbindung der Formeln (1a) und (1b) 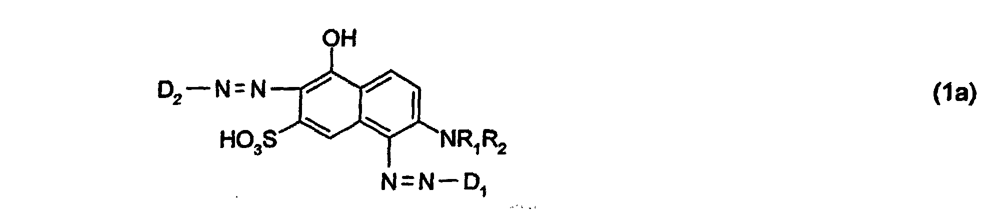 und 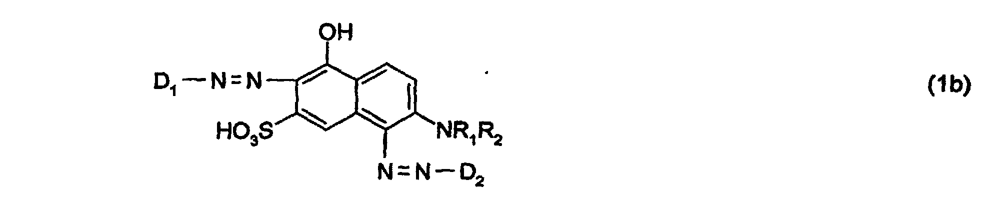 zusammen mit mindestens einer Verbindung der Formeln (1c) und (1d) 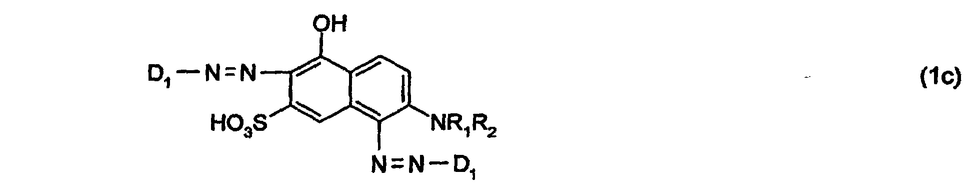 und 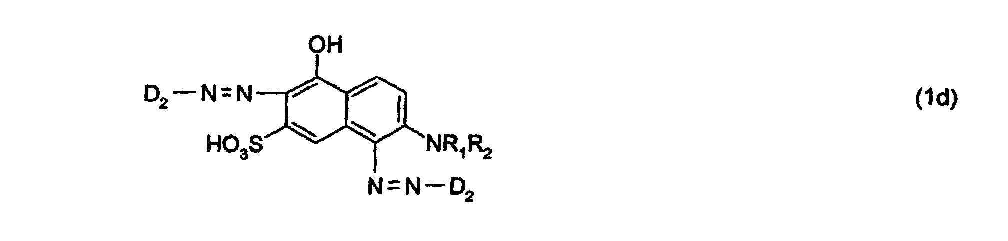 worin
R₁ und R₂ Wasserstoff bedeuten, und
D₁ und D₂ nicht identisch sind und unabhängig voneinander je für einen Rest der Formel (2) 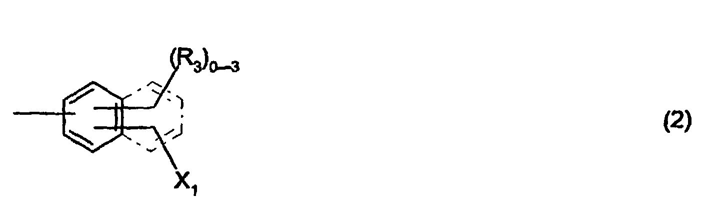 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3a), (3b), (3c), (3d), (3e) oder (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
oder 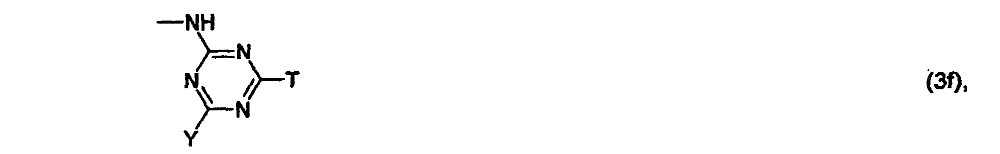 bedeutet, worin
Y Halogen; T unabhängig die Bedeutung von Y hat; für Hydroxy; C₁-C₄-Alkoxy; gegebenenfalls durch Hydroxy, Carboxy oder Sulfo substituiertes C₁-C₄-Alkylthio; Amino; ein- oder zweifach durch C₁-C₈-Alkyl substituiertes Amino, wobei das Alkyl gegebenenfalls durch Sulfo, Sulfato, Hydroxy, Carboxy oder Phenyl weitersubstituiert ist und gegebenenfalls durch einen Rest -O- unterbrochen ist; Cyclohexylamino; Morpholino; N-C₁-C₄-Alkyl-N-phenylamino, Phenylamino oder Naphthylamino, wobei das Phenyl oder Naphthyl gegebenenfalls durch C₁-C₄-Alkyl, C₁-C₄-Alkoxy, Carboxy, Sulfo oder Halogen substituiert ist; oder für einen faserreaktiven Rest der Formel (4a), (4b), (4c), (4d) oder (4e)
-NH-(CH₂)₂₋₃-SO₂-Z (4a),
-NH-(CH₂)₂₋₃-O-(CH₂)₂₋₃-SO₂-Z (4b), 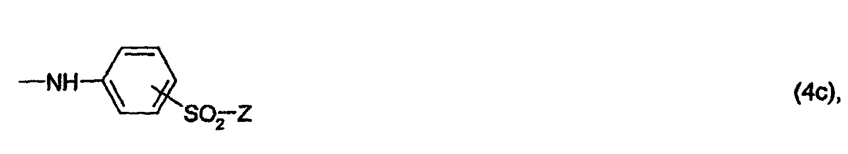 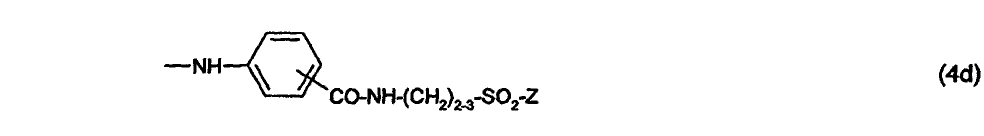
oder 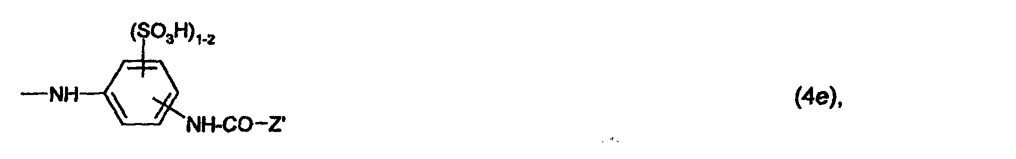 steht, worin
Z Vinyl oder einen Rest -CH₂-CH₂-U bedeutet und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist,
Z' für eine Gruppe -CH(Hal)-CH₂-Hal oder -C(Hal)=CH₂ steht,
m und n unabhängig voneinander die Zahl 2, 3 oder 4 sind, und
Hal Halogen ist.

2. Farbstoffmischungen gemäss Anspruch 1, **dadurch gekennzeichnet, dass** U -Cl oder -OSO₃H, insbesondere -OSO₃H, ist.

3. Farbstoffmischungen gemäss einem der Ansprüche 1 und 2, **dadurch gekennzeichnet, dass**
D₁ und D₂ unabhängig voneinander jeweils ein Rest der Formel (2a), (2b), (2c), (2d) oder (2e) 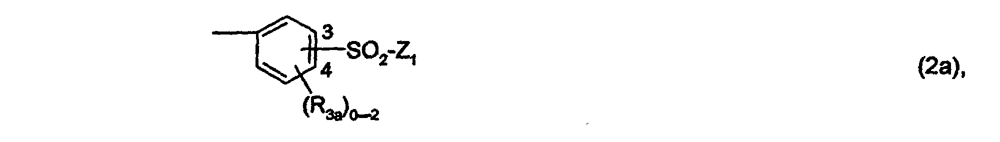 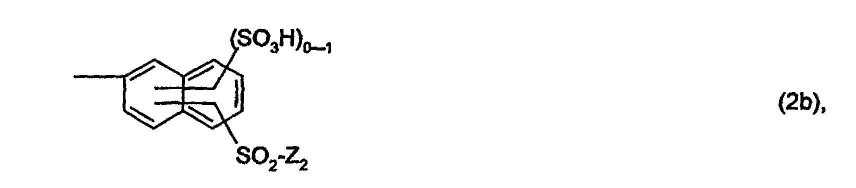 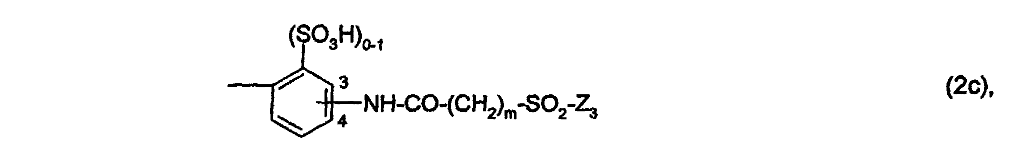 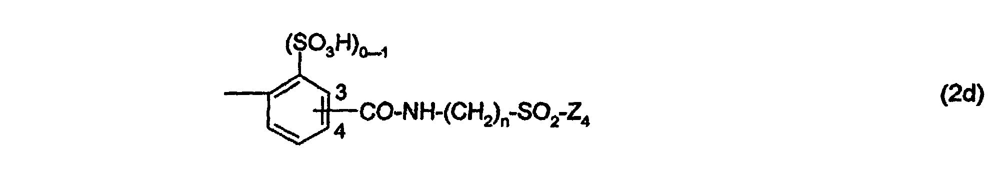 oder 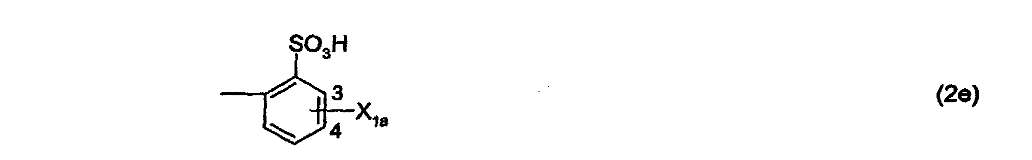 sind, worin
(R₃ₐ)₀₋₂ für 0 bis 2 gleiche oder voneinander verschiedene Substituenten ausgewählt aus der Gruppe Halogen, C₁-C₄-Alkyl, C₁-C₄-Alkoxy oder Sulfo steht,
X₁ₐ für α,β-Dibrompropionylamino oder α-Bromacryloylamino,
m und n unabhängig voneinander die Zahl 2 oder 3 sind, und
Z₁, Z₂, Z₃ und Z₄ unabhängig voneinander Vinyl, β-Chlorethyl oder β-Sulfatoethyl bedeuten.

4. Farbstoffe der Formel (1) 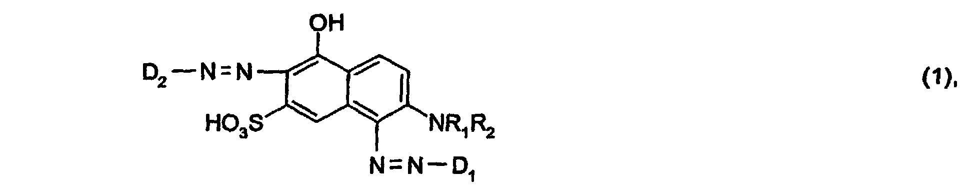 worin
R₁ und R₂ Wasserstoff bedeuten, und
D₁ und D₂ unabhängig voneinander je für einen Rest der Formel (2) 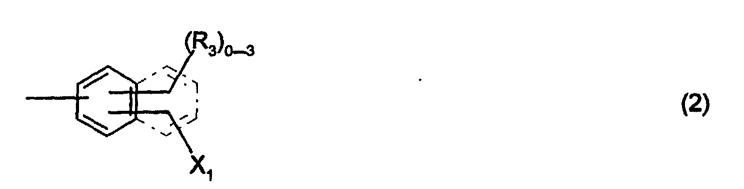 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3b), (3c), (3d), (3e) oder (3f)
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
oder 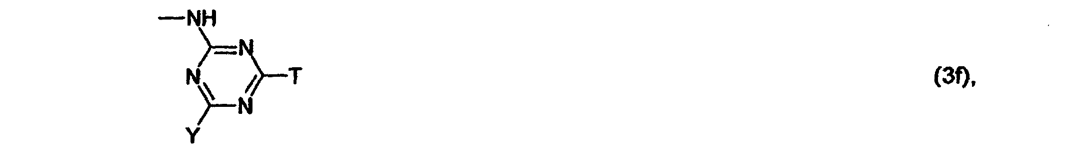 bedeutet, worin
Y Halogen; T unabhängig die Bedeutung von Y hat; für Hydroxy; C₁-C₄-Alkoxy;
gegebenenfalls durch Hydroxy, Carboxy oder Sulfo substituiertes C₁-C₄-Alkylthio; Amino;
ein- oder zweifach durch C₁-C₈-Alkyl substituiertes Amino, wobei das Alkyl gegebenenfalls durch Sulfo, Sulfato, Hydroxy, Carboxy oder Phenyl weitersubstituiert ist und gegebenenfalls durch einen Rest -O- unterbrochen ist; Cyclohexylamino; Morpholino; N-C₁-C₄-Alkyl-N-phenylamino, Phenylamino oder Naphthylamino, wobei das Phenyl oder Naphthyl gegebenenfalls durch C₁-C₄-Alkyl, C₁-C₄-Alkoxy, Carboxy, Sulfo oder Halogen substituiert ist; oder für einen faserreaktiven Rest der Formel (4a), (4b), (4c), (4d) oder (4e)
-NH-(CH₂)₂₋₃-SO₂-Z (4a),
-NH-(CH₂)₂₋₃-O-(CH₂)₂₋₃-SO₂-Z (4b), 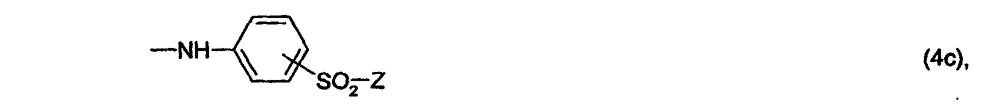 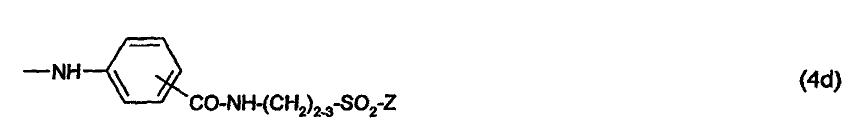
oder 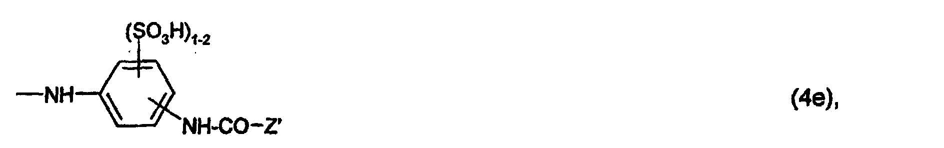 steht, worin
Z Vinyl oder einen Rest -CH₂-CH₂-U bedeutet und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist,
Z' für eine Gruppe -CH(Hal)-CH₂-Hal oder -C(Hal)=CH₂ steht,
m und n unabhängig voneinander die Zahl 2, 3 oder 4 sind, und
Hal Halogen ist.

5. Verfahren zur Herstellung von Farbstoffen der Formel (1) gemäss Anspruch 4, **dadurch gekennzeichnet, dass** man
(i) etwa 1 Moläquivalent eines Amins der Formel (5a)
D₁-NH₂ (5a)
in üblicher Weise diazotiert und mit etwa 1 Moläquivalent einer Verbindung der Formel (6) 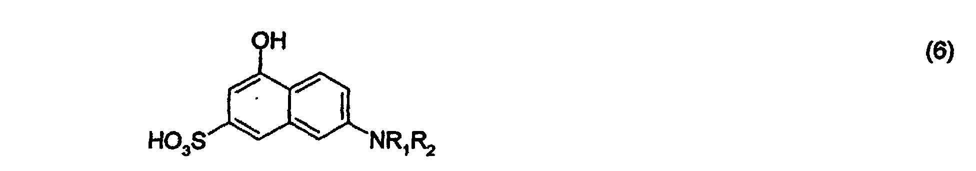 zur Verbindung der Formel (7a) 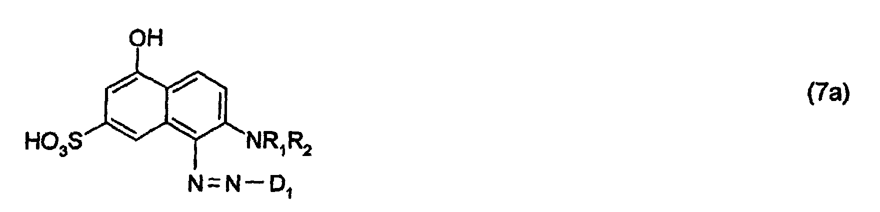 umsetzt; und
(ii) etwa 1 Moläquivalent eines Amins der Formel (5b)
D₂-NH₂ (5b)
in üblicher Weise diazotiert und mit etwa 1 Moläquivalent der gemäss (i) erhaltenen Verbindung der Formel (7a) zur Verbindung der Formel (1) umsetzt, worin für D₁, D₂, R₁ und R₂ jeweils die im Anspruch 4 genannten Bedeutungen gelten.

6. Farbstoffmischung **dadurch gekennzeichnet, dass** sie
mindestens einen Farbstoff der Formel (1) 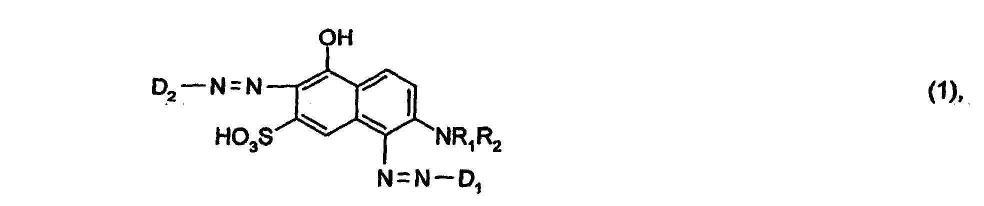 worin
R₁ und R₂ Wasserstoff bedeuten, und
D₁ und D₂ unabhängig voneinander je für einen Rest der Formel (2) 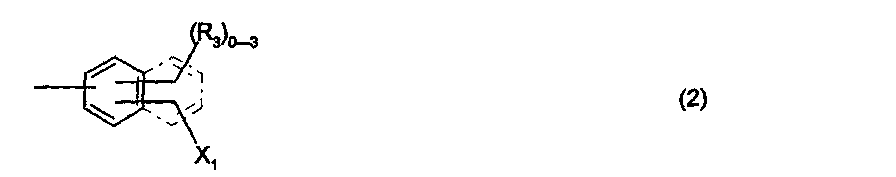 stehen, worin
(R₃)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro oder Sulfo steht und
X₁ einen Rest der Formel (3a), (3b), (3c), (3d), (3e) oder (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
oder 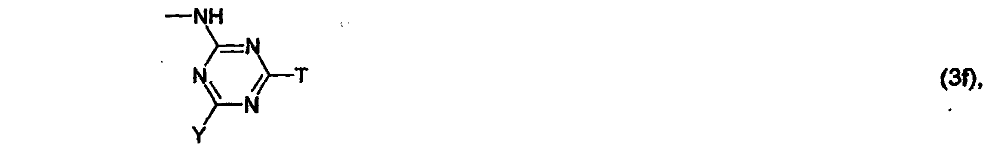 bedeutet, worin
Y Halogen; T unabhängig die Bedeutung von Y hat; für Hydroxy; C₁-C₄-Alkoxy; gegebenenfalls durch Hydroxy, Carboxy oder Sulfo substituiertes C₁-C₄-Alkylthio; Amino; ein- oder zweifach durch C₁-C₈-Alkyl substituiertes Amino, wobei das Alkyl gegebenenfalls durch Sulfo, Sulfato, Hydroxy, Carboxy oder Phenyl weitersubstituiert ist und gegebenenfalls durch einen Rest -O- unterbrochen ist; Cyclohexylamino; Morpholino; N-C₁-C₄-Alkyl-N-phenylamino, Phenylamino oder Naphthylamino, wobei das Phenyl oder Naphthyl gegebenenfalls durch C₁-C₄-Alkyl, C₁-C₄-Alkoxy, Carboxy, Sulfo oder Halogen substituiert ist; oder für einen faserreaktiven Rest der Formel (4a), (4b), (4c), (4d) oder (4e)
-NH-(CH₂)₂₋₃-SO₂-Z (4a),
-NH-(CH₂)₂₋₃-O-(CH₂)₂₋₃-SO₂-Z (4b), 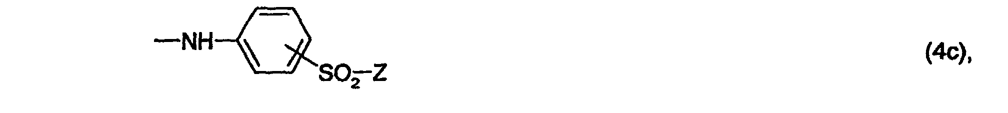 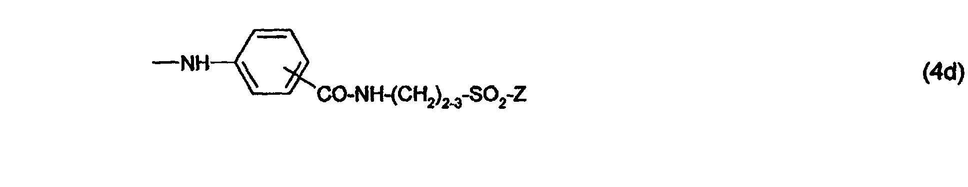
oder 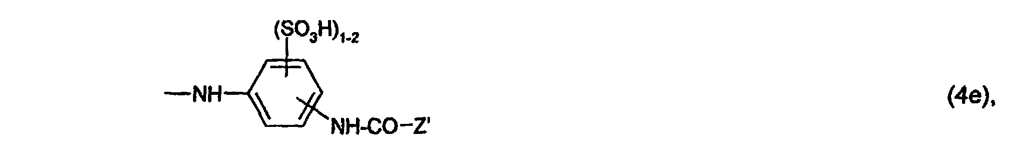 steht, worin
Z Vinyl oder einen Rest -CH₂-CH₂-U bedeutet und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist,
Z' für eine Gruppe -CH(Hal)-CH₂-Hal oder -C(Hal)=CH₂ steht,
m und n unabhängig voneinander die Zahl 2, 3 oder 4 sind, und
Hal Halogen ist,
zusammen mit mindestens einem Farbstoff der Formel (8) 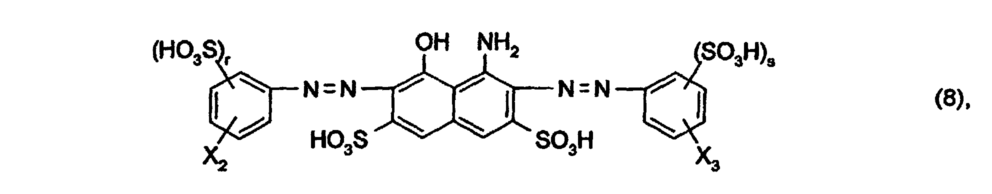 enthalten, worin
r und s unabhängig voneinander je die Zahl 0 oder 1 und
X₂ und X₃ unabhängig voneinander je einen Rest der oben genannten Formel (3a), (3b), (3c) oder (3d) bedeuten.

7. Verwendung von Farbstoffmischungen gemäss Anspruch 1 zum Färben oder Bedrucken von hydroxylgruppenhaltigen oder stickstoffhaltigen Fasermaterialien.

8. Verwendung gemäss Anspruch 7, **dadurch gekennzeichnet, dass** man cellulosehaltige Fasermaterialien, insbesondere baumwollhaltige Fasermaterialien, färbt oder bedruckt.

9. Verwendung von Verbindungen der Formel (1) gemäss Anspruch 4 als faserreaktive Farbstoffe zum Färben oder Bedrucken von hydroxylgruppenhaltigen oder stickstoffhaltigen Fasermaterialien.

10. Verwendung gemäss Anspruch 9, **dadurch gekennzeichnet, dass** man cellulosehaltige Fasermaterialien, insbesondere baumwollhaltige Fasermaterialien, färbt oder bedruckt.

## Claims

1. A dye mixture comprising
at least one compound of formulae (1a) and (1b) 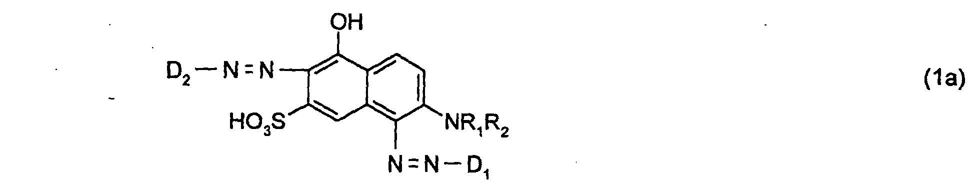 and 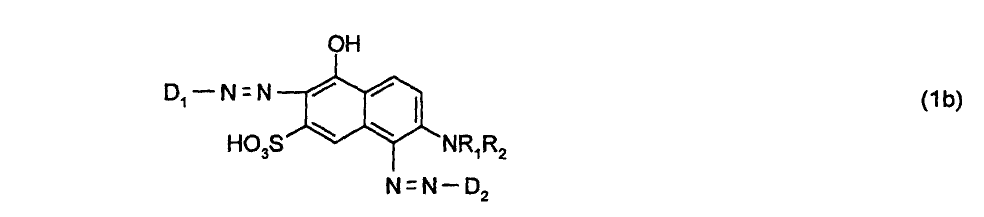 together with at least one compound of formulae (1c) and (1d) 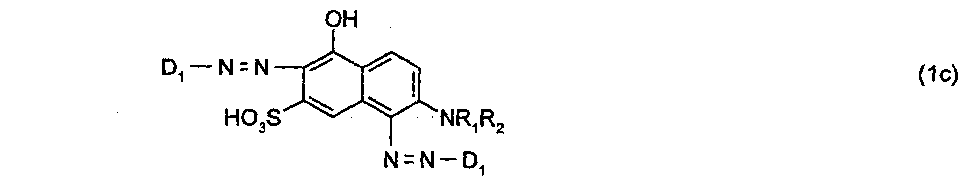 and 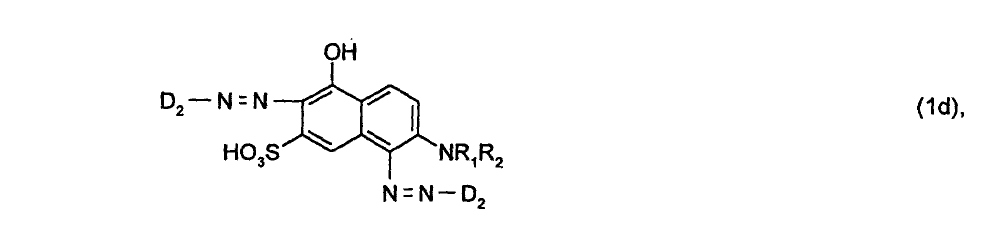 wherein
R₁ and R₂ are hydrogen, and
D₁ and D₂ are not identical and are each independently of the other a radical of formula (2) 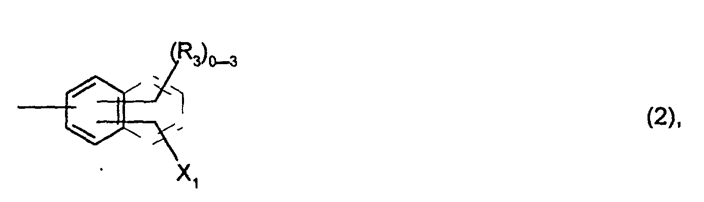 wherein
(R₃)₀₋₃ denotes from 0 to 3 identical or different substituents selected from the group halogen, C₁-C₄alkyl, C₁-C₄alkoxy, carboxy, nitro and sulfo, and
X₁ is a radical of formula (3a), (3b), (3c), (3d), (3e) or (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
or 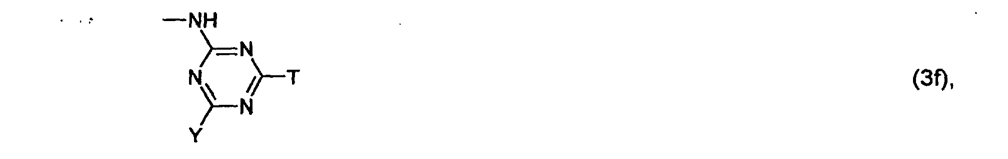 wherein
Y is halogen; T independently thereof has a meaning given for Y; or is hydroxy; C₁-C₄alkoxy; unsubstituted or hydroxy-, carboxy- or sulfo-substituted C₁-C₄alkylthio; amino; amino mono- or di-substituted by C₁-C₈alkyl, wherein the alkyl is unsubstituted or is further substituted by sulfo, sulfato, hydroxy, carboxy or by phenyl and is uninterrupted or interrupted by an -O-radical; cyclohexylamino; morpholino; N-C₁-C₄alkyl-N-phenylamino, phenylamino or naphthylamino, wherein the phenyl or naphthyl is unsubstituted or substituted by C₁-C₄alkyl, C₁-C₄alkoxy, carboxy, sulfo or by halogen; or is a fibre-reactive radical of formula (4a), (4b), (4c), (4d) or (4e)
-NH-(CH₂)₂₋₃-SO₂-Z (4a),
-NH-(CH₂)₂₋₃-O-(CH₂)₂₋₃-SO₂-Z (4b), 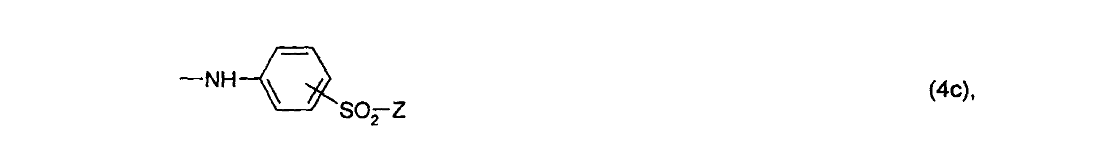 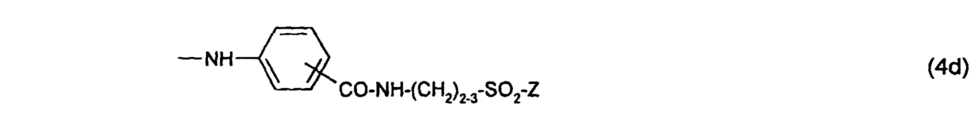
or 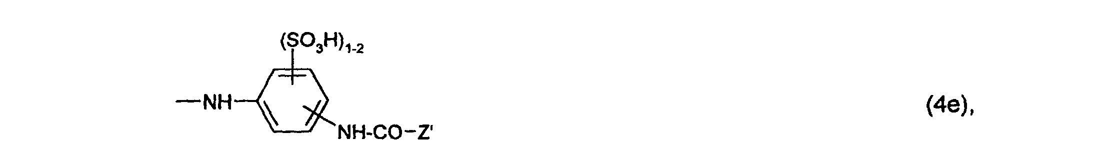 wherein
Z is vinyl or a radical -CH₂-CH₂-U and U is -Cl, -Br, -F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂,
Z' is a group -CH(Hal)-CH₂-Hal or -C(Hal)=CH₂,
m and n are each independently of the other the number 2, 3 or 4, and
Hal is halogen.

2. A dye mixture according to claim 1, wherein U is -Cl or -OSO₃H, especially -OSO₃H.

3. A dye mixture according to either claim 1 or claim 2, wherein
D₁ and D₂ are each independently of the other a radical of formula (2a), (2b), (2c), (2d) or (2e) 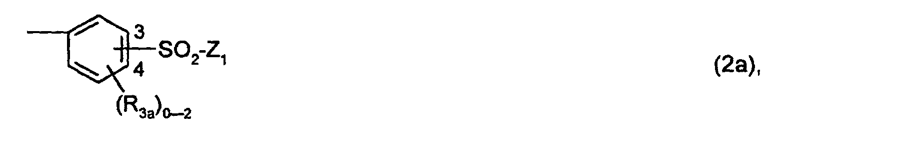 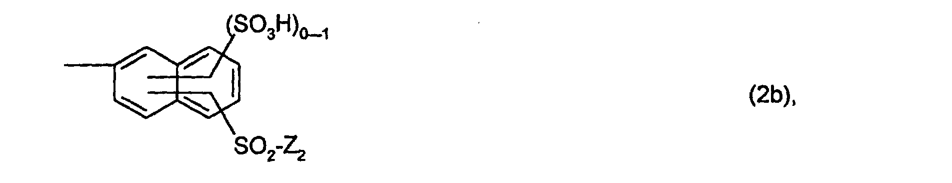 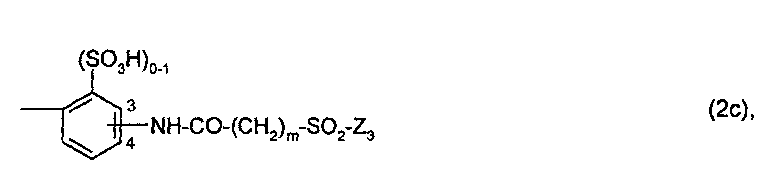 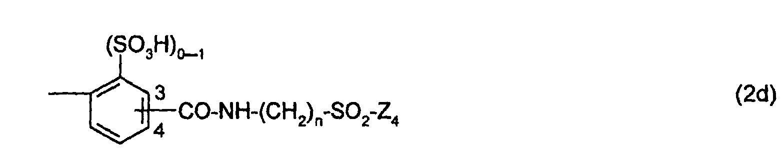 or 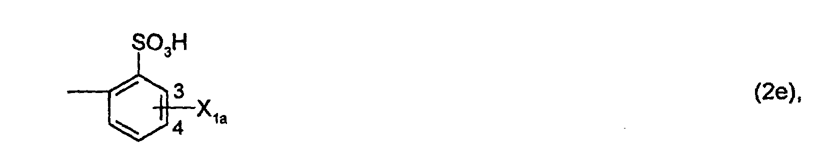 wherein
(R₃ₐ)₀₋₂ denotes from 0 to 2 identical or different substituents selected from the group halogen, C₁-C₄alkyl, C₁-C₄alkoxy and sulfo,
X₁ₐ is α,β-dibromopropionylamino or α-bromoacryloylamino,
m and n are each independently of the other the number 2 or 3, and
Z₁, Z₂, Z₃ and Z₄ are each independently of the others vinyl, β-chloroethyl or β-sulfatoethyl.

4. A dye of formula (1) 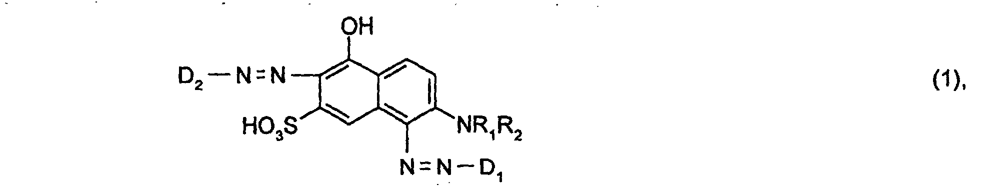 wherein
R₁ and R₂ are hydrogen, and
D₁ and D₂ are each independently of the other a radical of formula (2) 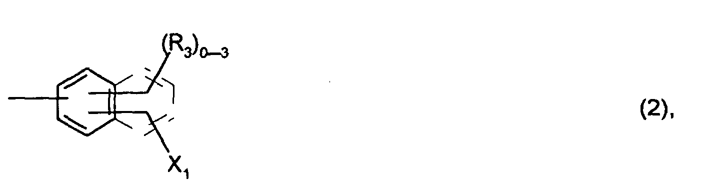 wherein
(R₃)₀₋₃ denotes from 0 to 3 identical or different substituents selected from the group halogen, C₁-C₄alkyl, C₁-C₄alkoxy, carboxy, nitro and sulfo, and
X₁ is a radical of formula (3b), (3c), (3d), (3e) or (3f)
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
or 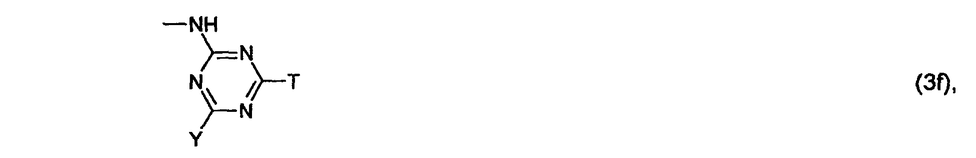 wherein
Y is halogen; T independently thereof has a meaning given for Y; or is hydroxy; C₁-C₄alkoxy; unsubstituted or hydroxy-, carboxy- or sulfo-substituted C₁-C₄alkylthio; amino; amino mono- or di-substituted by C₁-C₈alkyl, wherein the alkyl is unsubstituted or is further substituted by sulfo, sulfato, hydroxy, carboxy or by phenyl and is uninterrupted or interrupted by an -O-radical; cyclohexylamino; morpholino; N-C₁-C₄alkyl-N-phenylamino, phenylamino or naphthylamino, wherein the phenyl or naphthyl is unsubstituted or substituted by C₁-C₄alkyl, C₁-C₄alkoxy, carboxy, sulfo or by halogen; or is a fibre-reactive radical of formula (4a), (4b), (4c), (4d) or (4e)
-NH-(CH₂)₂₋₃-SO₂-Z (4a),
-NH-(CH₂)₂₋₃-O-(CH₂)₂₋₃-SO₂-Z (4b), 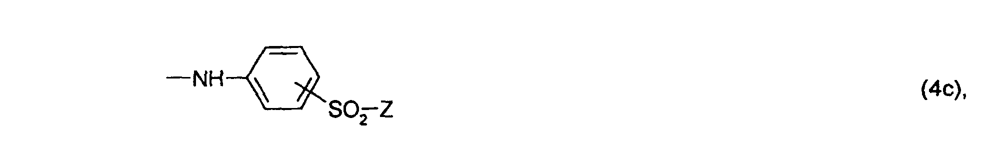 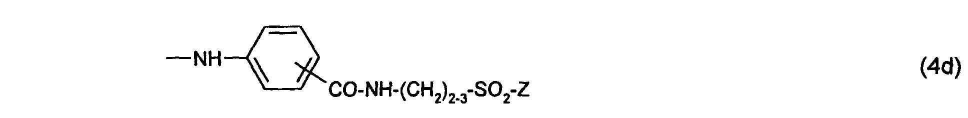
or 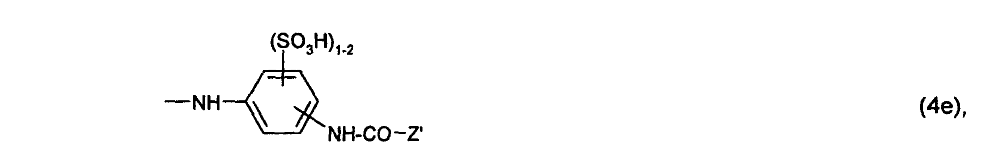 wherein
Z is vinyl or a radical -CH₂-CH₂-U and U is -Cl, -Br, -F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂,
Z' is a group -CH(Hal)-CH₂-Hal or -C(Hal)=CH₂,
m and n are each independently of the other the number 2, 3 or 4, and
Hal is halogen.

5. A process for the preparation of a dye of formula (1) according to claim 4, wherein
(i) approximately 1 molar equivalent of an amine of formula (5a)
D₁-NH₂ (5a)
is diazotised in customary manner and reacted with approximately 1 molar equivalent of a compound of formula (6) 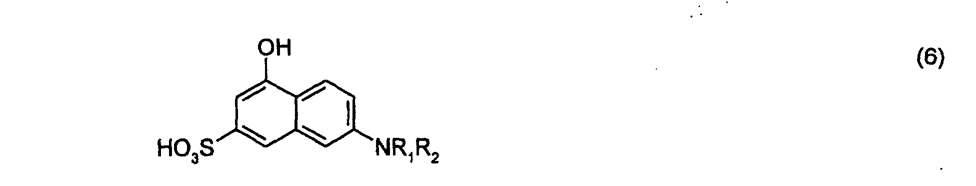 to form the compound of formula (7a) 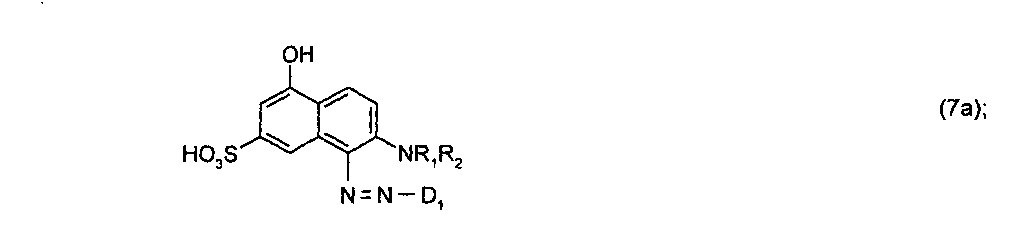 and
(ii) approximately 1 molar equivalent of an amine of formula (5b)
D₂-NH₂ (5b)
is diazotised in customary manner and reacted with approximately 1 molar equivalent of the compound of formula (7a) obtained according to (i), to form the compound of formula (1), wherein the definitions given in claim 4 for each of D₁, D₂, R₁ and R₂ apply.

6. A dye mixture comprising
at least one dye of formula (1) 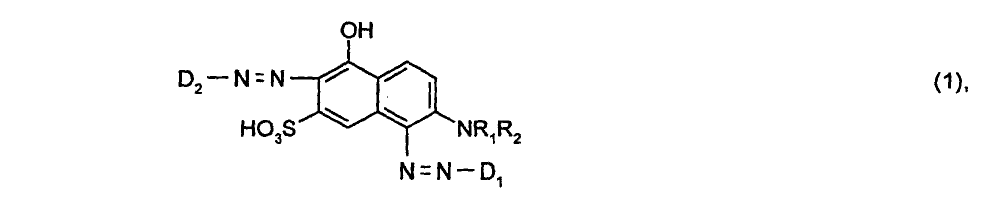 wherein
R₁ and R₂ are hydrogen, and
D₁ and D₂ are each independently of the other a radical of formula (2) 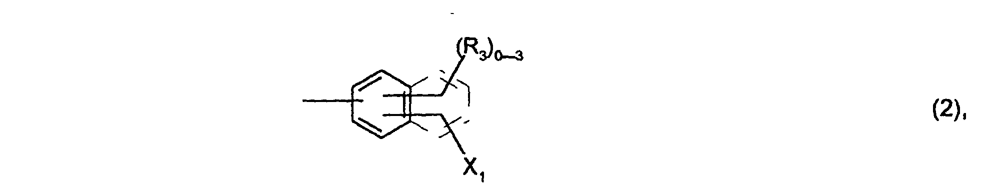 wherein
(R₃)₀₋₃ denotes from 0 to 3 identical or different substituents selected from the group halogen, C₁-C₄alkyl, C₁-C₄alkoxy, carboxy, nitro and sulfo, and
X₁ is a radical of formula (3a), (3b), (3c), (3d), (3e) or (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
or 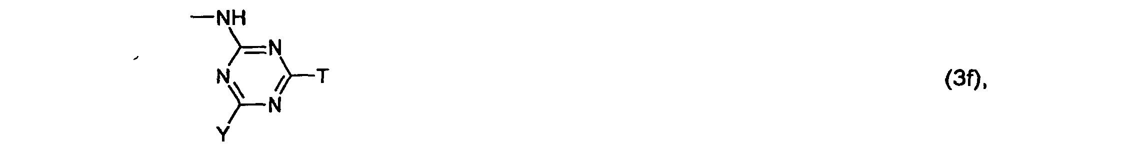 wherein
Y is halogen; T independently thereof has a meaning given for Y; or is hydroxy; C₁-C₄alkoxy; unsubstituted or hydroxy-, carboxy- or sulfo-substituted C₁-C₄alkylthio; amino; amino mono- or di-substituted by C₁-C₈alkyl, wherein the alkyl is unsubstituted or is further substituted by sulfo, sulfato, hydroxy, carboxy or by phenyl and is uninterrupted or interrupted by an -O-radical; cyclohexylamino; morpholino; N-C₁-C₄alkyl-N-phenylamino, phenylamino or naphthylamino, wherein the phenyl or naphthyl is unsubstituted or substituted by C₁-C₄alkyl, C₁-C₄alkoxy, carboxy, sulfo or by halogen; or is a fibre-reactive radical of formula (4a), (4b), (4c), (4d) or (4e)
-NH-(CH₂)₂₋₃-SO₂-Z (4a),
-NH-(CH₂)₂₋₃-O-(CH₂)₂₋₃-SO₂-Z (4b), 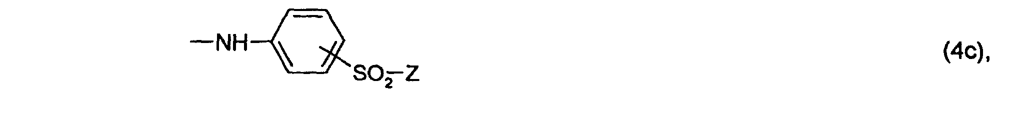 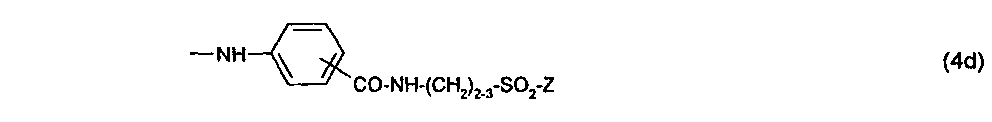
or 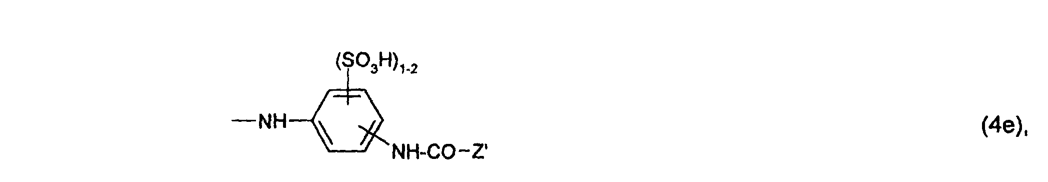 wherein
Z is vinyl or a radical -CH₂-CH₂-U and U is -Cl, -Br, -F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂,
Z' is a group -CH(Hal)-CH₂-Hal or -C(Hal)=CH₂,
m and n are each independently of the other the number 2, 3 or 4, and
Hal is halogen,
together with at least one dye of formula (8) 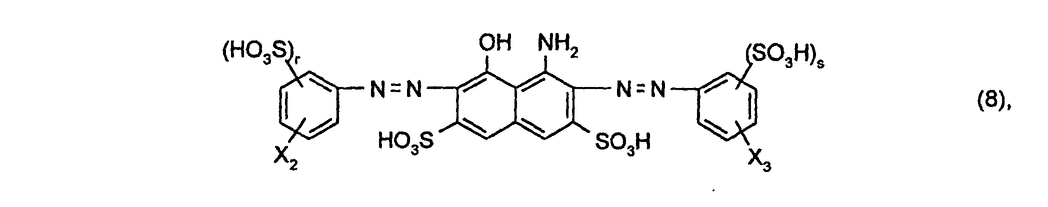 wherein
r and s are each independently of the other the number 0 or 1, and
X₂ and X₃ are each independently of the other a radical of formula (3a), (3b), (3c) or (3d) indicated hereinbefore.

7. Use of a dye mixture according to claim 1 for the dyeing or printing of hydroxyl-group-containing or nitrogen-containing fibre materials.

8. Use according to claim 7, wherein cellulosic fibre materials, especially cotton-containing fibre materials, are dyed or printed.

9. Use of a compound of formula (1) according to claim 4 as a fibre-reactive dye for the dyeing or printing of hydroxyl-group-containing or nitrogen-containing fibre materials.

10. Use according to claim 9, wherein cellulosic fibre materials, especially cotton-containing fibre materials, are dyed or printed.

## Revendications

1. Mélanges de colorants contenant au moins un composé des formules (1a) et (1b) 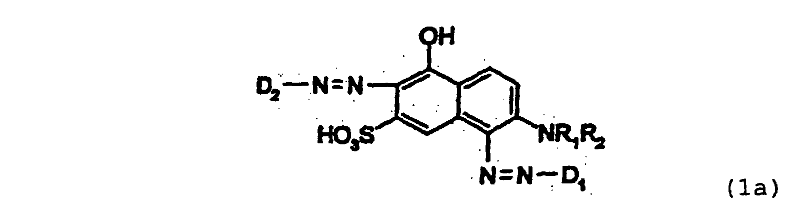 et 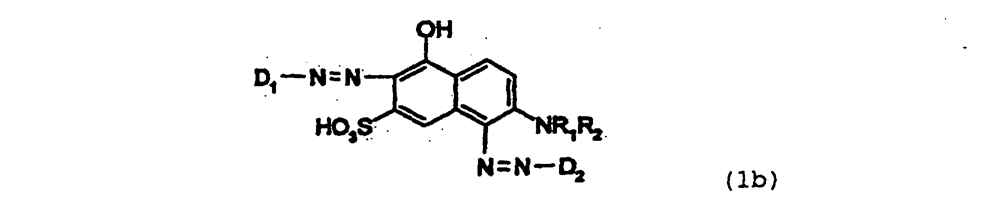 avec en même temps au moins un composé des formules (1c) et (1d) 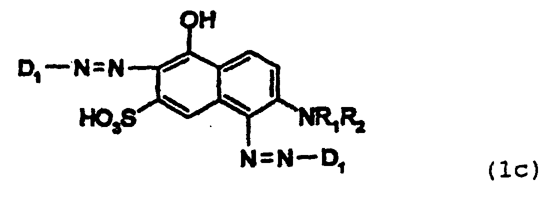 et 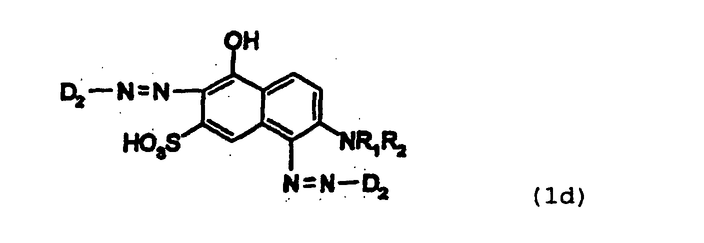 dans lesquelles
R₁ et R₂ représentent un atome d'hydrogène, et
D₁ et D₂ ne sont pas identiques et représentent indépendamment l'un de l'autre respectivement un groupe de formule (2) ne sont pas identiques et représentent indépendamment l'un de l'autre respectivement un groupe de formule (2) 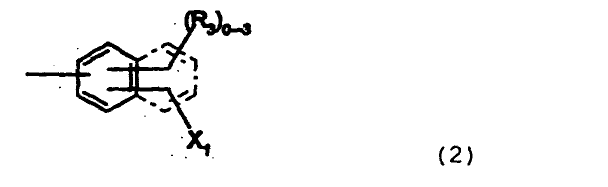
dans laquelle
(R₃)₀₋₃ représente 0 à 3 substituants identiques ou différents les uns des autres choisis dans le groupe d'un atome d'halogène, un groupe alkyle en C₁ à C₄, alcoxy en C₁ à C₄, carboxy, nitro ou sulfo et
X₁ représente un groupe de formule (3a), (3b), (3c), (3d), (3e) ou (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
ou 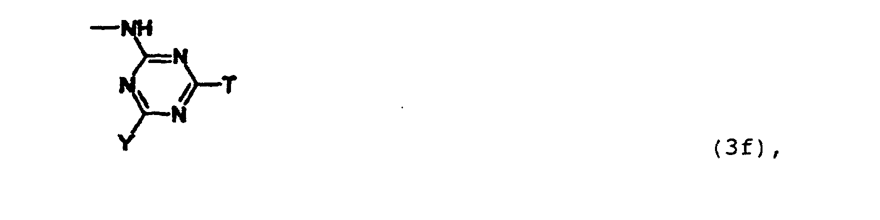 dans lesquelles
Y représente un atome d'halogène ; T a indépendamment la signification de Y ; représente un groupe hydroxy ; alcoxy en C₁ à C₄ ; alkylthio en C₁ à C₄ éventuellement substitué par un hydroxy, carboxy ou sulfo ; amino ; amino substitué une ou deux fois par un groupe alkyle en C₁ à C₈, dans lequel le groupe alkyle est éventuellement encore substitué par un sulfo, sulfato, hydroxy, carboxy ou phényle et est éventuellement interrompu par un groupe -O- ; cyclohexylamino ; morpholino ; N-alkyle en C₁ à C₄-N-phénylamino, phénylamino ou naphtylamino, le groupe phényle ou naphtyle étant éventuellement substitué par un groupe alkyle en C₁ à C₄, alcoxy en C₁ à C₄, carboxy, sulfo ou un atome d'halogène ; ou représente un groupe réactif avec les fibres de formules (4a), (4b), (4c), (4d) ou (4e)
-NH-(CH₂)₂₋₃-SO₂-Z (4a),
-NH-(CH₂)₂₋₃-O-(CH₂)₂₋₃-SO₂-Z (4b), 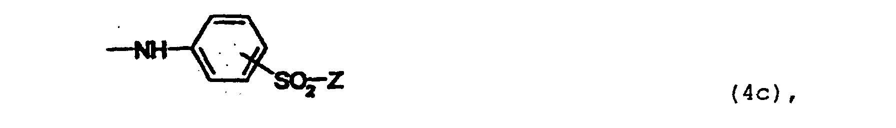 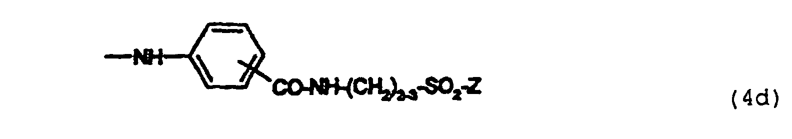
ou 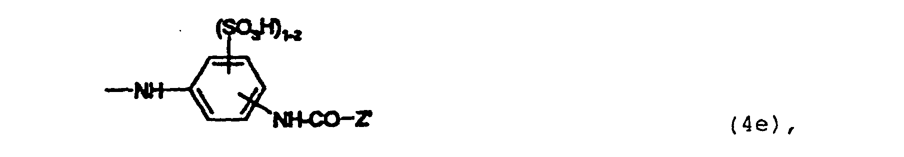 dans lesquelles
Z représente un groupe vinyle ou un groupe -CH₂-CH₂-U et U représente -Cl, -Br, -F, -OSO₃H, -SSO₃H, -OCO-CH₃, -OPO₃H₂, -OCO-C₆H₅, -OSO₂-alkyle en C₁ à C₄ ou -OSO₂-N(alkyle en C₁ à C₄)₂,
Z' représente un groupe -CH(Hal)-CH₂-Hal ou -C(Hal)=CH₂,
m et n sont indépendamment l'un de l'autre le nombre 2, 3 ou 4 et
Hal est un halogène.

2. Mélanges de colorants selon la revendication 1, **caractérisés en ce que** U est -Cl ou -OSO₃H, en particulier -OSO₃H.

3. Mélanges de colorants selon une des revendications 1 et 2, **caractérisés en ce que**
D₁ et D₂ représentent indépendamment l'un de l'autre respectivement un groupe de formules (2a), (2b), (2c), (2d) ou (2e) 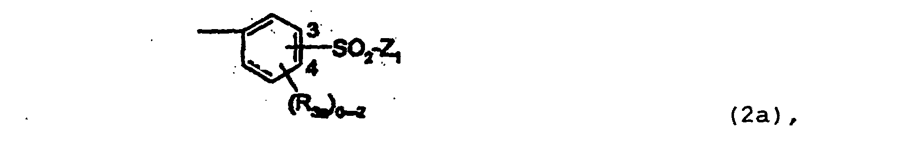 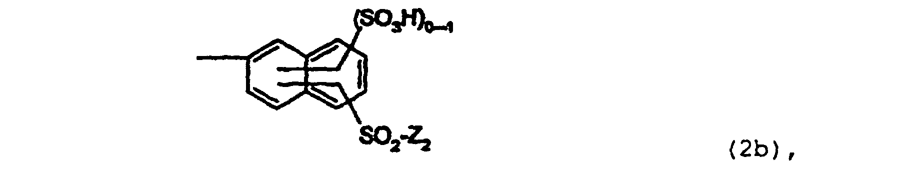 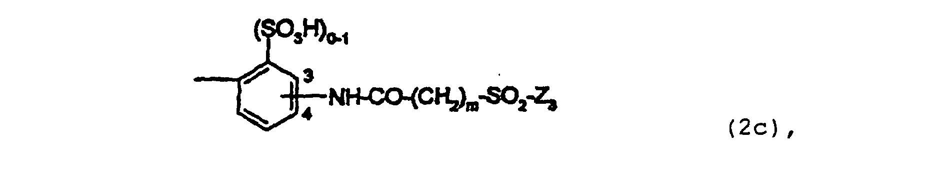 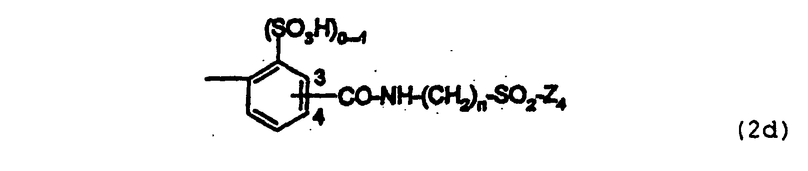 ou 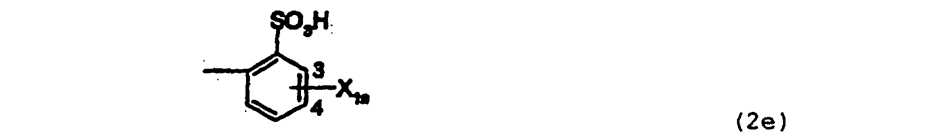 dans lesquelles
(R₃ₐ)₀₋₂ représente 0 à 2 substituants identiques ou différents l'un de l'autre choisis dans le groupe d'un atome d'halogène, un groupe alkyle en C₁ à C₄, alcoxy en C₁ à C₄ ou sulfo,
X₁ₐ représente l'α,β-dibromopropionylamino ou l'α-bromacryloylamino,
m et n sont indépendamment l'un de l'autre le nombre 2 ou 3, et
Z₁, Z₂, Z₃ et Z₄ représentent indépendamment l'un de l'autre un groupe vinyle, β-chloréthyle ou β-sulfatoéthyle.

4. Colorants de formule (1) 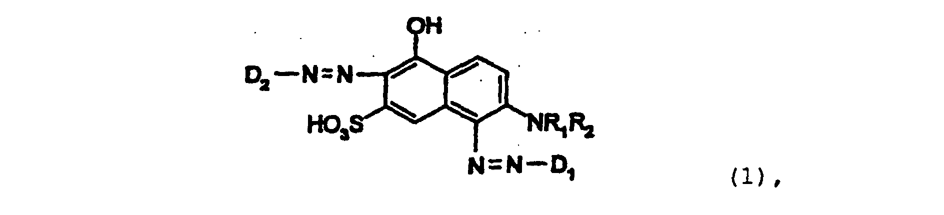 dans laquelle
R₁ et R₂ représentent un atome d'hydrogène, et
D₁ et D₂ représentent indépendamment l'un de l'autre respectivement un groupe de formule (2) 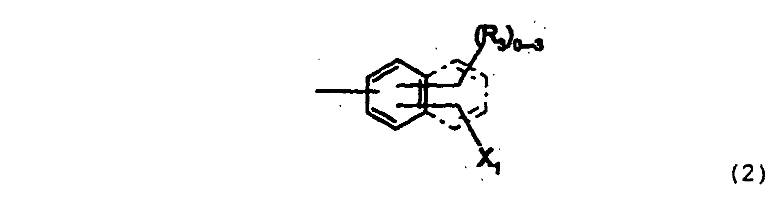
dans laquelle
(R₃)₀₋₃ représente 0 à 3 substituants identiques ou différents les uns des autres choisis dans le groupe d'un halogène,un groupe alkyle en C₁ à C₄, alcoxy en C₁ à C₄, carboxy, nitro ou sulfo et
X₁ représente un groupe de formule (3b), (3c), (3d), (3e) ou (3f),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
ou 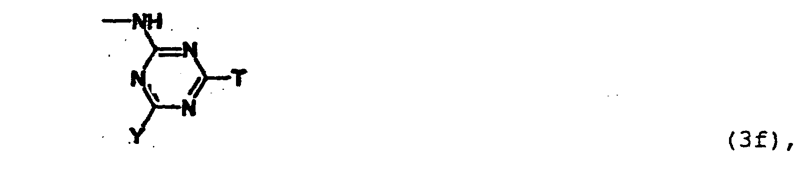 dans lesquelles
Y représente un atome d'halogène ; T a indépendamment la signification de Y ; représente un groupe hydroxy ; alcoxy en C₁ à C₄ ; alkylthio en C₁ à C₄ éventuellement substitué par un groupe hydroxy, carboxy ou sulfo ; amino ; amino substitué une ou deux fois par un groupe alkyle en C₁ à C₈, dans lequel le groupe alkyle est éventuellement encore substitué par un sulfo, sulfato, hydroxy, carboxy ou phényle et est éventuellement interrompu par un groupe -O- ; cyclohexylamino ; morpholino ; N-alkyle en C₁ à C₄-N-phénylamino, phénylamino ou naphtylamino, le groupe phényle ou naphtyle étant éventuellement substitué par un groupe alkyle en C₁ à C₄, alcoxy en C₁ à C₄, carboxy, sulfo ou un atome d'halogène ; ou représente un groupe réactif des fibres de formule (4a), (4b), (4c), (4d) ou (4e)
-NH-(CH₂)₂₋₃-SO₂-Z (4a),
-NH-(CH₂)₂₋₃-O-(CH₂)₂₋₃-SO₂-Z (4b), 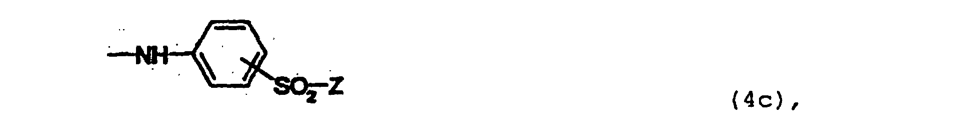 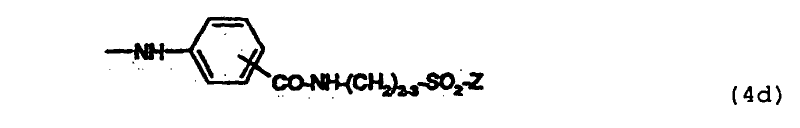
ou 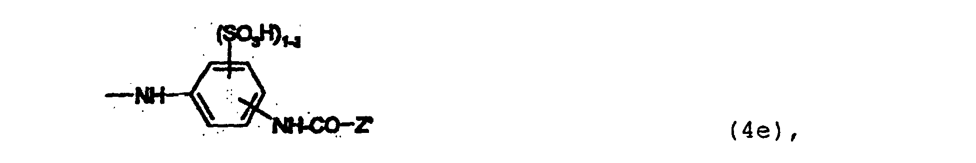 dans lesquelles
Z représente un groupe vinyle ou un groupe -CH₂-CH₂-U et U représente -Cl, -Br, -F, -OSO₃H, -SSO₃H, -OCO-CH₃, -OPO₃H₂, -OCO-C₆H₅, -OSO₂-alkyle en C₁ à C₄ ou -OSO₂-N(alkyle en C₁ à C₄)₂,
Z' représente un groupe -CH(Hal)-CH₂-Hal ou -C(Hal)=CH₂,
m et n sont indépendamment l'un de l'autre le nombre 2, 3 ou 4, et
Hal est un halogène.

5. Procédé pour la préparation de colorants de formule (1) selon la revendication 4, **caractérisé en ce que** l'on réalise de manière usuelle la diazotation
(i) d'environ 1 équivalent molaire d'une amine de formule (5a)
D₁-NH₂ (5a)
et l'on fait réagir avec environ 1 équivalent molaire d'un composé de formule (6) 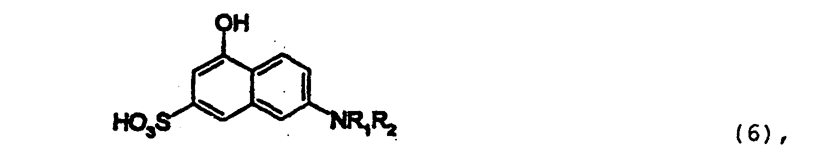 pour obtenir le composé de formule (7a) 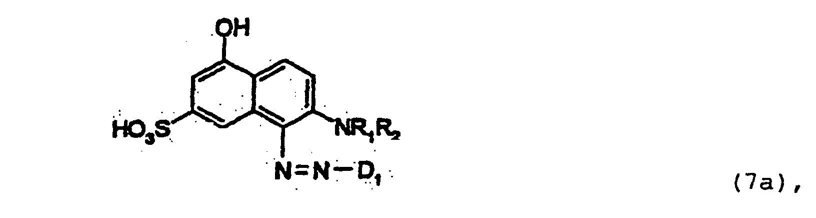 et **en ce que** l'on réalise la diazotation de manière usuelle
(ii) d'environ 1 équivalent molaire d'une amine de formule (5b)
D₂-NH₂ (5b)
et on la met à réagir avec environ 1 équivalent molaire du composé de formule (7a) obtenu selon (i) pour obtenir le composé de formule (1), dans laquelle les significations mentionnées dans la revendication 4 valent respectivement pour D₁, D₂, R₁ et R₂.

6. Mélange de colorants **caractérisés en ce qu'**il contient
au moins un colorant de formule (1) 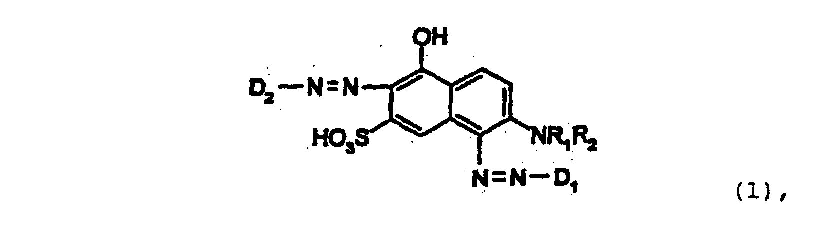 dans laquelle
R₁ et R₂ représentent un atome d'hydrogène, et
D₁ et D₂ représentent indépendamment l'un de l'autre respectivement un groupe de formule (2) 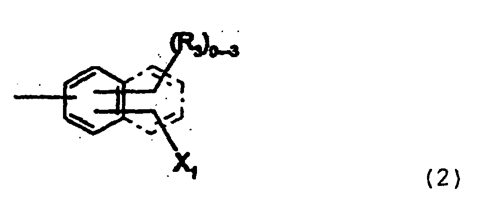
dans laquelle
(R₃)₀₋₃ représente 0 à 3 substituants identiques ou différents les uns des autres choisis dans le groupe d'un atome d'halogène, un groupe alkyle en C₁ à C₄, alcoxy en C₁ à C₄, carboxy, nitro ou sulfo et
X₁ représente un groupe de formule (3a), (3b), (3c), (3d), (3e) ou (3f)
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
ou 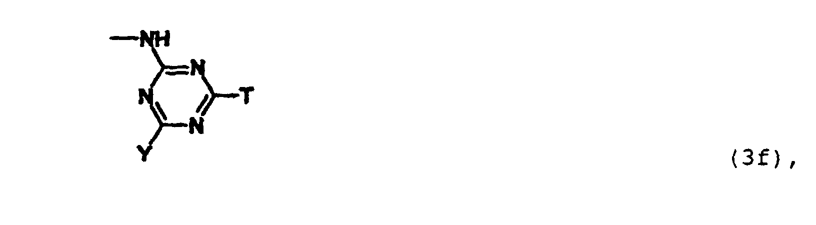 dans lesquelles
Y représente un atome d'halogène ; T a indépendamment la signification de Y ; représente un groupe hydroxy ; alcoxy en C₁ à C₄ ; alkylthio en C₁ à C₄ éventuellement substitué par un hydroxy, carboxy ou sulfo ; amino ; amino substitué une ou deux fois par un groupe alkyle en C₁ à C₈, dans lequel le groupe alkyle est encore éventuellement substitué par un sulfo, sulfato, hydroxy, carboxy ou phényle et est éventuellement interrompu par un groupe -O- ; cyclohexylamino ; morpholino ; N-alkyle en C₁ à C₄-N-phénylamino, phénylamino ou naphtylamino, dans lequel le groupe phényle ou naphtyle est éventuellement substitué par un groupe alkyle en C₁ à C₄, alcoxy en C₁ à C₄, carboxy, sulfo ou un atome d'halogène ; ou représente un groupe réactif avec les fibres de formule (4a), (4b), (4c), (4d) ou (4e)
-NH-(CH₂)₂₋₃-SO₂-Z (4a),
-NH-(CH₂)₂₋₃-O-(CH₂)₂₋₃-SO₂-Z (4b), 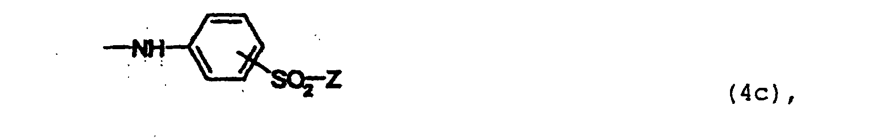 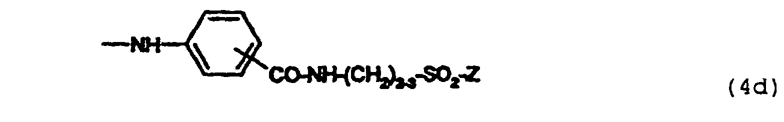
ou 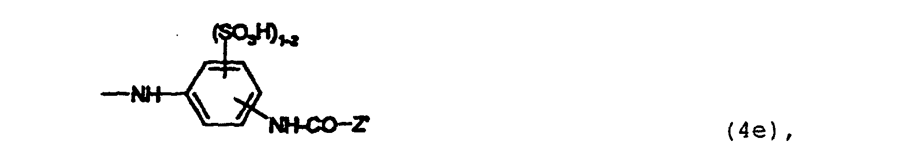 dans lesquelles
Z représente un groupe vinyle ou un groupe -CH₂-CH₂-U et U représente -Cl, -Br, -F, -OSO₃H, -SSO₃H, -OCO-CH₃, -OPO₃H₂, -OCO-C₆H₅, -OSO₂-alkyle en C₁ à C₄ ou -OSO₂-N(alkyle en C₁ à C₄)₂,
Z' représente un groupe -CH(Hal)-CH₂-Hal ou -C(Hal)=CH₂,
m et n sont indépendamment l'un de l'autre le nombre 2, 3 ou 4 et
Hal est un halogène,
avec en même temps au moins un colorant de formule (8) 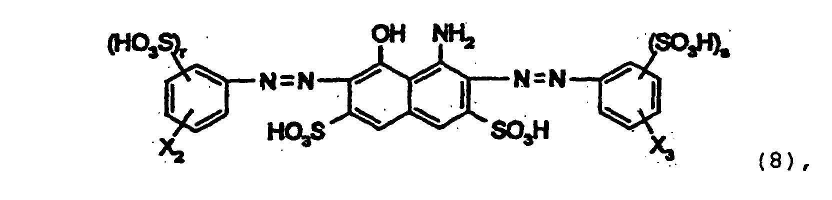 dans laquelle
r et s représentent respectivement indépendamment l'un de l'autre le nombre 0 ou 1, et
X₂ et X₃ représentent indépendamment l'un de l'autre respectivement un reste de la formule mentionnée ci-dessus (3a), (3b), (3c) ou (3d).

7. Utilisation de mélanges de colorants selon la revendication 1 pour la teinture ou l'impression de matériaux fibreux contenant des groupes hydroxyle ou contenant de l'azote.

8. Utilisation selon la revendication 7, **caractérisée en ce que** l'on teinte ou l'on imprime des matériaux fibreux cellulosiques, en particulier des matériaux fibreux contenant du coton.

9. Utilisation de composés de formule (1) selon la revendication 4 comme colorants réactifs des fibres pour la teinture ou l'impression de matériaux fibreux contenant des groupes hydroxyle ou contenant de l'azote.

10. Utilisation selon la revendication 9, **caractérisée en ce que** l'on teinte ou l'on imprime des matériaux fibreux cellulosiques, en particulier des matériaux fibreux contenant du coton.
